# EUROPEAN PATENT APPLICATION

(11) **EP 4 826 747 A1**
(43) Date of publication of application: **21.10.2026**
(21) Application number: 24918621.4
(22) Date of filing: 03.10.2024
(51) Int. Cl.: H01G 4/30

(54) **MULTILAYER CERAMIC CAPACITOR**

(30) Priority: 16.01.2024 JP 2024004334
(71) Applicant: Murata Manufacturing Co., Ltd., Nagaokakyo-shi, Kyoto 617-8555 (JP)
(72) Inventor: MIKAMI, Yuu, Nagaokakyo-shi, Kyoto 617-8555 (JP); IZUMI, Tatsuya, Nagaokakyo-shi, Kyoto 617-8555 (JP); GOYA, Shinya, Nagaokakyo-shi, Kyoto 617-8555 (JP)
(74) Representative: Stöckeler, Ferdinand
(86) International application number: PCT/JP2024/035405
(87) International publication number: WO 2025/154334

(57) **Abstract**

To provide a multilayer ceramic capacitor in which dense ceramic layers are formed while ensuring sinterability and which has high moisture resistance reliability.

In a cross section of a multilayer body 10 extending in a lamination (T) direction and a width (W) direction of a multilayer ceramic capacitor 1, the calcium silicate content is greater in outer side margin portions 41o and 42o than in inner side margin portions 41i and 42i and is greater in outer-side outer layer portions 31o and 32o than in inner-side outer layer portions 31i and 32i, and the Ca-Mn-Si-based oxide content is greater in the inner side margin portions 41i and 42i than in the outer side margin portions 41o and 42o and is greater in the inner-side outer layer portions 311i and 32i than in the outer-side outer layer portions 31o and 32o.

## Description

### Technical Field

The present invention relates to a multilayer ceramic capacitor.

### Background Art

In recent years, with the trend toward miniaturization of electronic devices, there has been a demand for miniaturization of electronic components having a multilayer structure (hereinafter, also referred to as multilayer ceramic capacitors) mounted on circuit boards.

In multilayer ceramic capacitors, techniques have conventionally been known to use a dielectric ceramic with a perovskite structure containing Ca and Zr as the main phase to reduce dielectric loss and improve performance in the high-frequency range, achieving a high Q value (where a high Q value indicates low energy loss within the capacitor) (for example, see Patent Document 1).

However, in a multilayer ceramic capacitor containing a CaZrO₃-based dielectric ceramic material, as described in, for example, Patent Document 1, growth of ceramic grains during firing of a green chip varies depending on a portion of the multilayer ceramic capacitor. Specifically, an outer layer portion or a side margin portion tends to have a large average grain size, compared with an internal layer portion. In the case where the average grain size in the outer layer portion or side margin portion is large, stress release is likely to occur when intergranular corrosion progresses, i.e., when the grain boundaries are eroded. This is likely to lead to a decrease in moisture resistance due to crack formation.

When an attempt is made to reduce the average grain size of the dielectric ceramic constituting the outer layer portion or the side margin portion, it is difficult to ensure the sinterability of the multilayer ceramic capacitor, and pores tend to remain in a region close to the internal layer portion, thereby readily decreasing moisture resistance and strength.

Accordingly, there is a demand to develop a multilayer ceramic capacitor in which a dense ceramic layer is formed while sinterability is ensured, and which has high moisture resistance reliability.

### Citation List

### Patent Document

Patent Document 1: Japanese Unexamined Patent Application Publication No. 2019-102752

### Summary of Invention

### Technical Problem

It is an object of the present invention to provide a multilayer ceramic capacitor in which a dense ceramic layer is formed while sinterability is ensured, and which has high moisture resistance reliability.

### Solution to Problem

The inventors have found that the moisture resistance of a multilayer ceramic capacitor is improved by making the calcium silicate content of the outer side margin portion greater than the calcium silicate content of the inner side margin portion in a cross section extending in the lamination direction and width direction of a multilayer body constituting the multilayer ceramic capacitor. This finding has led to the completion of the present invention.

That is, the present invention provides a multilayer ceramic capacitor including a multilayer body including a plurality of dielectric layers and a plurality of internal electrode layers alternately laminated along a lamination direction, a first main surface and a second main surface opposing each other in the lamination direction, a first side surface and a second side surface opposing each other in a width direction orthogonal to the lamination direction, and a first end surface and a second end surface opposing each other in a length direction orthogonal to both the lamination direction and the width direction,
a first outer electrode provided on the first end surface and connected to end portions of the plurality of internal electrode layers, and
a second outer electrode provided on the second end surface and connected to end portions of the plurality of internal electrode layers,
in which the multilayer body includes an internal layer portion in which the plurality of internal electrode layers face each other to generate an electrostatic capacity, a first outer layer portion located on a first main surface side of the internal layer portion in the lamination direction, a second outer layer portion located on a second main surface side of the internal layer portion in the lamination direction, a first side margin portion located on a first side surface side, in the width direction, of the internal layer portion and on a first side surface side of the first outer layer portion, and a second side margin portion located on a second side surface side, in the width direction, of the internal layer portion and on a second side surface side of the second outer layer portion,
the first side margin portion and the second side margin portion each include an outer side margin portion located on the first side surface side or the second side surface side, and an inner side margin portion located closer to the internal layer portion than the outer side margin portion,
in a cross section of the multilayer body extending in the lamination direction and the width direction, the calcium silicate content of the outer side margin portion is greater than the calcium silicate content of the inner side margin portion,
the Ca-Mn-Si-based oxide content of the inner side margin portion is greater than the Ca-Mn-Si-based oxide content of the outer side margin portion,
the first outer layer portion and the second outer layer portion each include an outer-side outer layer portion located on the first main surface side or the second main surface side, and an inner-side outer layer portion located closer to the internal layer portion than the outer-side outer layer portion,
in a cross section of the multilayer body extending in the lamination direction and the width direction, the calcium silicate content of the outer-side outer layer portion is greater than the calcium silicate content of the inner-side outer layer portion, and
the Ca-Mn-Si-based oxide content of the inner-side outer layer portion is greater than the Ca-Mn-Si-based oxide content of the outer-side outer layer portion.

### Advantageous Effects of Invention

According to the present invention, it is possible to provide a multilayer ceramic capacitor in which a dense ceramic layer is formed while sinterability is ensured, and which has high moisture resistance reliability.

### Brief Description of Drawings

[Fig. 1] Fig. 1 is a schematic view illustrating the appearance of a multilayer ceramic capacitor of the present invention.
[Fig. 2] Fig. 2 is a schematic view illustrating the appearance of the multilayer body of a multilayer ceramic capacitor of the present invention.
[Fig. 3] Fig. 3 is a cross-sectional view taken along line III-III of the multilayer ceramic capacitor of the present invention.
[Fig. 4] Fig. 4 is a cross-sectional view taken along line IV-IV of the multilayer ceramic capacitor of the present invention.
[Fig. 5] Fig. 5 is a cross-sectional view taken along line V-V of the multilayer ceramic capacitor of the present invention.
[Fig. 6] Fig. 6 is a view illustrating a manufacturing process of a multilayer ceramic capacitor of the present invention (first embodiment).
[Fig. 7] Fig. 7 is a view illustrating the manufacturing process of the multilayer ceramic capacitor of the present invention (first embodiment).
[Fig. 8] Fig. 8 is a view illustrating the manufacturing process of the multilayer ceramic capacitor of the present invention (first embodiment).
[Fig. 9] Fig. 9 is a view illustrating the manufacturing process of the multilayer ceramic capacitor of the present invention (first embodiment).
[Fig. 10] Fig. 10 is a view illustrating the manufacturing process of the multilayer ceramic capacitor of the present invention (first embodiment).
[Fig. 11] Fig. 11 is a view illustrating a manufacturing process of a multilayer ceramic capacitor of the present invention (second embodiment).
[Fig. 12] Fig. 12 is a view illustrating the manufacturing process of the multilayer ceramic capacitor of the present invention (second embodiment).

### Description of Embodiments

Hereinafter, embodiments of the present invention will be described. The embodiments are illustrative examples of embodiments of the present invention, and the present invention is not limited to the contents of the embodiments. Contents described in different embodiments may be implemented in combination, and implementations in such a case are also included in the present invention. The drawings are provided to facilitate understanding of the specification and may be schematically illustrated, and ratios of dimensions of illustrated components or between components do not correspond to ratios of those dimensions described in the specification, in some cases. Components described in the specification may be omitted in the drawings, or may be illustrated with their number reduced.

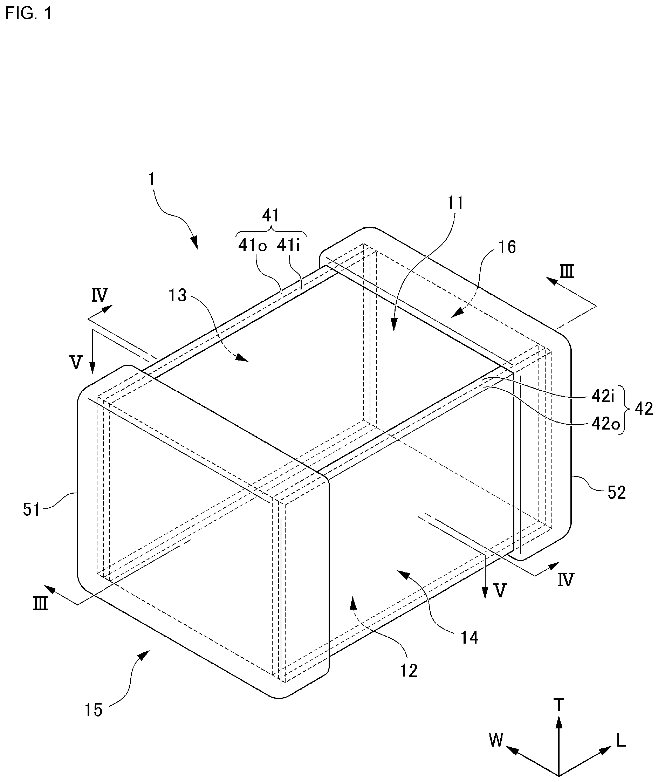

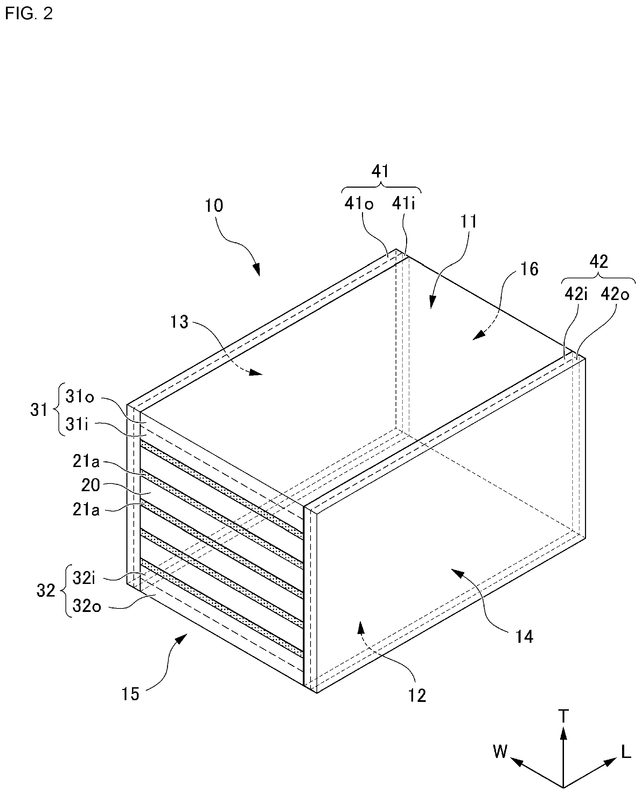

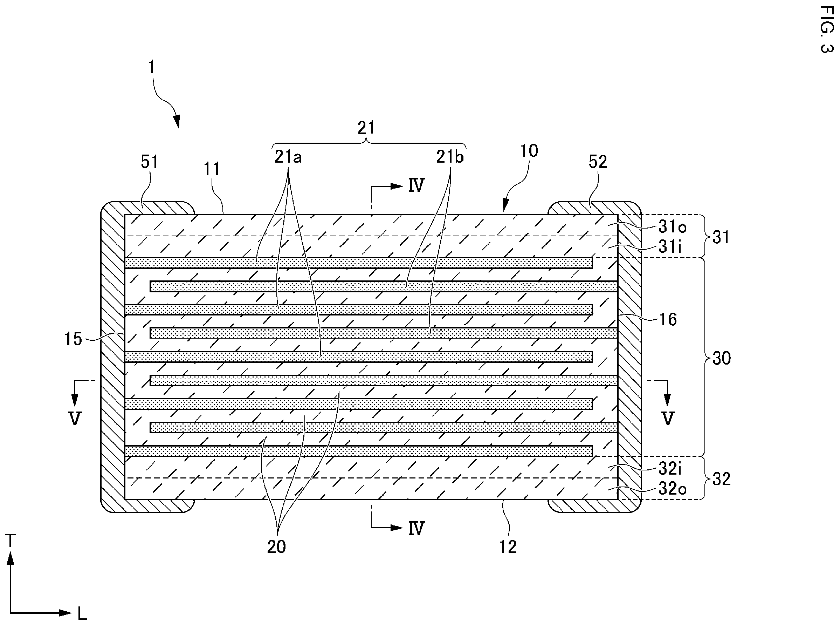

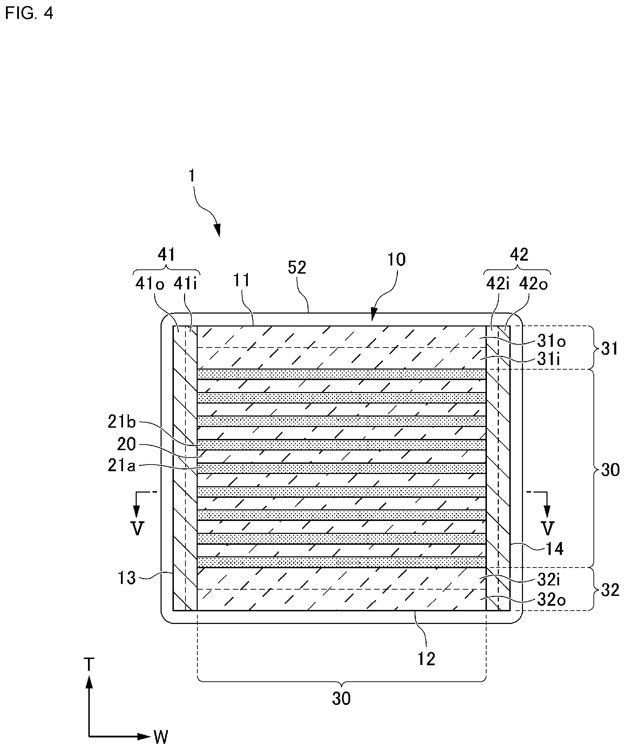

Fig. 1 is a perspective view schematically illustrating an example of a multilayer ceramic capacitor of the present invention. Fig. 2 is a perspective view schematically illustrating an example of a multilayer body constituting the multilayer ceramic capacitor illustrated in Fig. 1. Fig. 3 is a cross-sectional view taken along line III-III of the multilayer ceramic capacitor illustrated in Fig. 1. Fig. 4 is a cross-sectional view taken along line IV-IV of the multilayer ceramic capacitor illustrated in Fig. 1.

In the present specification, the lamination direction, the width direction, and the length direction of the multilayer ceramic capacitor and the multilayer body are defined as the directions indicated by arrows T, W, and L, respectively, in a multilayer ceramic capacitor 1 illustrated in Fig. 1 and a multilayer body 10 illustrated in Fig. 2. In the embodiments, the lamination (T) direction, the width (W) direction, and the length (L) direction are orthogonal to one another; however, these directions are not necessarily orthogonal and may intersect one another. The lamination (T) direction is a direction in which a plurality of dielectric layers 20 and a plurality of internal electrode layers 21 are stacked.

The multilayer ceramic capacitor 1 illustrated in Fig. 1 includes the multilayer body 10 and a pair of outer electrodes disposed on both end surfaces of the multilayer body 10, the pair of outer electrodes including a first outer electrode 51 and a second outer electrode 52.

As illustrated in Fig. 2, the multilayer body 10 has a rectangular parallelepiped shape or a substantially rectangular parallelepiped shape, and includes a first main surface 11 and a second main surface 12 opposing each other in the lamination (T) direction, a first side surface 13 and a second side surface 14 opposing each other in the width (W) direction orthogonal to the lamination (T) direction, and a first end surface 15 and a second end surface 16 opposing each other in the length (L) direction orthogonal to the lamination (T) direction and the width (W) direction.

In the present specification, a cross section orthogonal to the first end surface 15 and the second end surface 16 and parallel to the lamination (T) direction of the multilayer ceramic capacitor 1 or the multilayer body 10 is referred to as an LT cross section, which extends in the length (L) direction and the lamination (T) direction. A cross section orthogonal to the first side surface 13 and the second side surface 14 and parallel to the lamination (T) direction of the multilayer ceramic capacitor 1 or the multilayer body 10 is referred to as a WT cross section, which extends in the width (W) direction and the lamination (T) direction. A cross section orthogonal to the first side surface 13, the second side surface 14, the first end surface 15, and the second end surface 16 and orthogonal to the lamination (T) direction of the multilayer ceramic capacitor 1 or the multilayer body 10 is referred to as an LW cross section, which extends in the length (L) direction and the width (W) direction. Accordingly, Fig. 3 illustrates an LT cross section of the multilayer ceramic capacitor 1, and Fig. 4 illustrates a WT cross section of the multilayer ceramic capacitor 1.

The multilayer body 10 preferably has rounded corner portions and rounded ridge portions. The corner portions are each a portion where three faces of the multilayer body intersect, and the ridge portions are each a portion where two faces of the multilayer body intersect.

As illustrated in Figs. 2, 3, and 4, the multilayer body 10 has a multilayer structure in which a plurality of dielectric layers 20 and a plurality of internal electrode layers 21 are stacked in the lamination (T) direction.

The internal electrode layers 21 include first internal electrode layers 21a and second internal electrode layers 21b. The dielectric layers 20 are disposed between the first internal electrode layers 21a and the second internal electrode layers 21b.

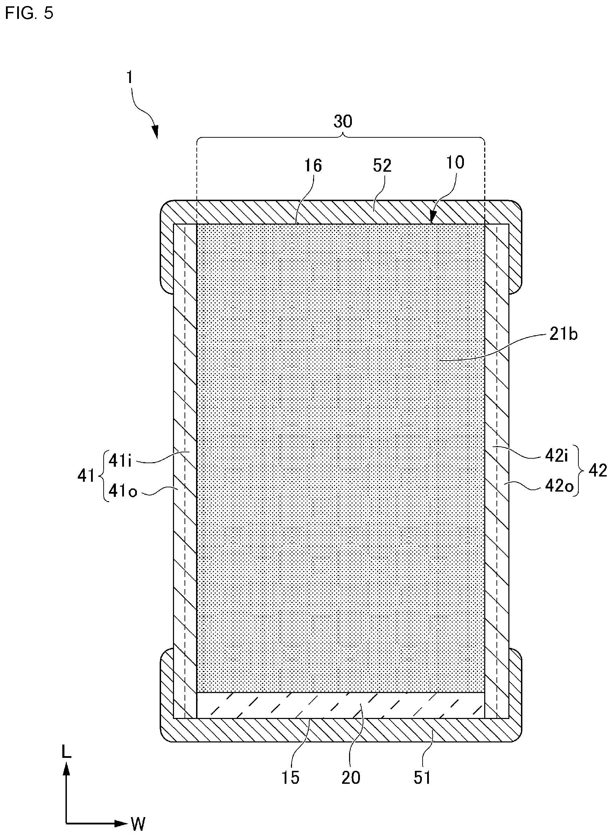

Fig. 5 illustrates an LW cross section of the multilayer ceramic capacitor illustrated in Fig. 1, taken along line V-V. The dielectric layers 20 extend along the width (W) direction and the length (L) direction, and the first internal electrode layers 21a and the second internal electrode layers 21b each extend in a plate shape along the dielectric layers 20.

The first internal electrode layers 21a extend to the first end surface 15 of the multilayer body 10. The second internal electrode layers 21b extend to the second end surface 16 of the multilayer body 10.

The first internal electrode layers 21a and the second internal electrode layers 21b face each other in the lamination (T) direction with the dielectric layers 20 interposed therebetween. An electrostatic capacity is generated by portions where the first internal electrode layers 21a and the second internal electrode layers 21b face each other with the dielectric layers 20 interposed therebetween.

The first internal electrode layers 21a and the second internal electrode layers 21b each preferably contain a metal, such as Ni, Cu, Ag, Pd, an Ag-Pd alloy, or Au. The first internal electrode layers 21a and the second internal electrode layers 21b may each contain, in addition to the above metal, the same dielectric ceramic material as that of the dielectric layers 20.

The dielectric layers 20 are made of a dielectric ceramic containing a perovskite-type compound that contains Ca and Zr. For such a dielectric ceramic, a powder obtained by mixing powders, such as CaCO₃, SrCO₃, BaCO₃, TiO₂, and ZrO₂, calcining the mixture, and then pulverizing the calcined mixture can be used as a ceramic raw material for the main component. To the ceramic raw material for the main component, SiO₂, MnCO₃, and the like can be added.

The first outer electrode 51 is provided on the first end surface 15 of the multilayer body 10, and, as illustrated in Fig. 1, includes a portion extending onto parts of the first main surface 11, the second main surface 12, the first side surface 13, and the second side surface 14. The first outer electrode 51 is connected to the first internal electrode layers 21a at the first end surface 15.

The second outer electrode 52 is provided on the second end surface 16 of the multilayer body 10, and, as illustrated in Fig. 1, includes a portion extending onto parts of the first main surface 11, the second main surface 12, the first side surface 13, and the second side surface 14. The second outer electrode 52 is connected to the second internal electrode layers 21b at the second end surface 16.

The first outer electrode 51 and the second outer electrode 52 can each include a base electrode layer and a plating layer disposed on the base electrode layer. The base electrode layer is formed by applying, onto the first end surface 15 and the second end surface 16 of the multilayer body 10, a conductive paste containing a metal component and a glass component, followed by baking. As the metal component contained in the conductive paste, for example, a metal, such as Cu, Ni, Ag, Pd, or Au, or an alloy, such as an Ag-Pd alloy, can be used. As the glass component contained in the conductive paste, B-Si-based glass, Ba-B-Si-based glass, B-Si-Zn-based glass, B-Si-Zn-Ba-based glass, B-Si-Zn-Ba-Ca-Al-based glass, or the like can be used.

The plating layer disposed on the base electrode layer contains, for example, at least one of a metal, such as Cu, Ni, Ag, Pd, or Au, or an alloy, such as an Ag-Pd alloy. The plating layer can have, for example, a two-layer structure including a Ni plating layer and a Sn plating layer. However, the plating layer may be a single layer or may include a plurality of layers. A resin electrode layer containing, for example, conductive particles and a thermosetting resin may be disposed between the base electrode layer and the plating layer.

As illustrated in Figs. 2, 3, and 4, the multilayer body 10 includes an internal layer portion 30 in which the dielectric layers 20, the first internal electrode layers 21a, and the second internal electrode layers 21b are stacked, a pair of a first outer layer portion 31 and a second outer layer portion 32 disposed to sandwich the internal layer portion 30 in the lamination (T) direction, and a pair of a first side margin portion 41 and a second side margin portion 42 disposed to sandwich the internal layer portion 30 and the first outer layer portion 31 and the second outer layer portion 32 in the width (W) direction.

In Figs. 3 and 4, the internal layer portion 30 is a region interposed, in the lamination (T) direction, between a first internal electrode layer 21a closest to the first main surface 11 and a first internal electrode layer 21a closest to the second main surface 12.

The first outer layer portion 31 and the second outer layer portion 32 are provided to sandwich the internal layer portion 30 in the lamination (T) direction. The first outer layer portion 31 is located on the first main surface 11 side of the multilayer body 10, and the second outer layer portion 32 is located on the second main surface 12 side of the multilayer body 10. The internal layer portion 30 is a region where the first internal electrode layers 21a and the second internal electrode layers 21b face each other.

The first outer layer portion 31 can have a two-layer structure stacked in the lamination (T) direction, and can include an outer-side outer layer portion 31o located on the first main surface 11 side and an inner-side outer layer portion 31i located closer to the internal layer portion 30 than the outer-side outer layer portion 31o is.

The second outer layer portion 32 can have a two-layer structure stacked in the lamination (T) direction, and can include an outer-side outer layer portion 32o located on the second main surface 12 side and an inner-side outer layer portion 32i located closer to the internal layer portion 30 than the outer-side outer layer portion 32o is.

The thicknesses, in the lamination (T) direction, of the outer-side outer layer portion 31o and the inner-side outer layer portion 31i that constitute the first outer layer portion 31 may be substantially the same, and the thicknesses, in the lamination (T) direction, of the outer-side outer layer portion 31o and the inner-side outer layer portion 31i may be different.

The thicknesses, in the lamination (T) direction, of the outer-side outer layer portion 32o and the inner-side outer layer portion 32i that constitute the second outer layer portion 32 may be substantially the same, and the thicknesses, in the lamination (T) direction, of the outer-side outer layer portion 32o and the inner-side outer layer portion 32i may be different.

The thickness, in the lamination direction, of the outer-side outer layer portion 31o is preferably greater than the thickness of the inner-side outer layer portion 31i. Specifically, the thickness, in the lamination (T) direction, of the outer-side outer layer portion 31o is preferably 10 µm or more and 30 µm or less.

When the thickness, in the lamination (T) direction, of the outer-side outer layer portion 31o is less than 10 µm, the outer-side outer layer portion 31o does not contain a sufficient amount of calcium silicate in some cases.

When the outer-side outer layer portion 31o does not contain a sufficient amount of calcium silicate, crystals may be formed in a small amount in the outer-side outer layer portion 31o.

When crystals are formed in a small amount in the outer-side outer layer portion 31o, an area occupied by crystals contained in the outer-side outer layer portion 31o decreases, and an area occupied by a sintering aid in the outer-side outer layer portion 31o increases. That is, the sintering aid content of the outer-side outer layer portion 31o increases.

Since a sintering aid is weak against moisture and the like, when the sintering aid content of the outer-side outer layer portion 31o increases, moisture and the like may enter the outer-side outer layer portion 31o from the outside.

As a result, moisture and the like may enter the outer-side outer layer portion 31o from the outside. When moisture and the like enter the internal layer portion 30 through the outer-side outer layer portion 31o, a short circuit may occur; thus, the moisture resistance reliability of the multilayer ceramic capacitor 1 may decrease.

When the thickness, in the lamination (T) direction, of the outer-side outer layer portion 31o is greater than 30 µm, the outer-side outer layer portion 31o may contain a large amount of calcium silicate.

When the outer-side outer layer portion 31o contains a large amount of calcium silicate, crystals may be formed in a large amount in the outer-side outer layer portion 31o. When crystals are formed in a large amount in the outer-side outer layer portion 31o, an area occupied by crystals contained in the outer-side outer layer portion 31o increases, and an area occupied by a sintering aid in the outer-side outer layer portion 31o decreases. That is, the sintering aid content of the outer-side outer layer portion 31o decreases.

The sintering aid contained in the outer-side outer layer portion 31o functions to improve the sinterability of the outer-side outer layer portion 31o during firing of the multilayer body 10. However, when the sintering aid content of the outer-side outer layer portion 31o decreases, the outer-side outer layer portion 31o is not sufficiently sintered; thus, the sinterability of the outer-side outer layer portion 31o cannot be ensured in some cases.

Therefore, in the outer-side outer layer portion 31o, a region of the outer-side outer layer portion 31o close to the internal layer portion 30, which is less likely to be affected by heat during firing, is insufficiently sintered, pores are likely to remain in the region of the outer-side outer layer portion 31o close to the internal layer portion 30, and moisture and the like may enter, from the outside, pores in the region of the outer-side outer layer portion 31o close to the internal layer portion 30.

As a result, when moisture and the like enter the internal layer portion 30 through the pores in the region of the outer-side outer layer portion 31o close to the internal layer portion 30, a short circuit may occur; thus, the moisture resistance reliability of the multilayer ceramic capacitor 1 cannot be ensured in some cases.

The thickness, in the lamination (T) direction, of the inner-side outer layer portion 31i is preferably 5 µm or more and 20 µm or less.

When the thickness, in the lamination (T) direction, of the inner-side outer layer portion 31i is less than 5 µm, the inner-side outer layer portion 31i does not contain a sufficient amount of calcium silicate in some cases.

When the inner-side outer layer portion 31i does not contain a sufficient amount of calcium silicate, crystals may be formed in a small amount in the inner-side outer layer portion 31i.

When crystals are formed in a small amount in the inner-side outer layer portion 31i, an area occupied by crystals in the inner-side outer layer portion 31i decreases, and an area occupied by a sintering aid in the inner-side outer layer portion 31i increases. That is, the sintering aid content of the inner-side outer layer portion 31i increases.

Since a sintering aid is weak against moisture and the like, when the sintering aid content of the outer-side outer layer portion 31i increases, moisture and the like may enter the inner-side outer layer portion 31i from the outside.

As a result, moisture and the like may enter the inner-side outer layer portion 31i from the outside. When moisture and the like enter the internal layer portion 30 through the inner-side outer layer portion 31i, a short circuit may occur; thus, the moisture resistance reliability of the multilayer ceramic capacitor 1 may decrease.

When the thickness, in the lamination (T) direction, of the inner-side outer layer portion 31i is greater than 20 µm, the outer-side outer layer portion 31i may contain a large amount of calcium silicate.

When the inner-side outer layer portion 31i contains a large amount of calcium silicate, crystals may be formed in a large amount in the inner-side outer layer portion 31i. When crystals are formed in a large amount in the inner-side outer layer portion 31i, an area occupied by crystals in the inner-side outer layer portion 31i increases, and an area occupied by the sintering aid in the inner-side outer layer portion 31i decreases. That is, the sintering aid content of the inner-side outer layer portion 31i decreases.

The sintering aid contained in the inner-side outer layer portion 31i functions to improve the sinterability of the inner-side outer layer portion 31i during firing of the multilayer body 10. However, when the sintering aid content of the inner-side outer layer portion 31i decreases, the inner-side outer layer portion 31i is not sufficiently sintered; thus, the sinterability of the inner-side outer layer portion 31i cannot be ensured in some cases.

Therefore, in the inner-side outer layer portion 31i, a region of the inner-side outer layer portion 31i close to the internal layer portion 30, which is less likely to be affected by heat during firing, is insufficiently sintered, and pores are likely to remain in the region of the inner-side outer layer portion 31i close to the internal layer portion 30, and moisture and the like may enter, from the outside, the pores in the region of the inner-side outer layer portion 31i close to the internal layer portion 30.

As a result, when moisture and the like enter the internal layer portion 30 through the pores in the region of the inner-side outer layer portion 31i close to the internal layer portion 30, a short circuit may occur; thus, the moisture resistance reliability of the multilayer ceramic capacitor 1 cannot be ensured in some cases.

Thus, when the thickness, in the lamination (T) direction, of the outer-side outer layer portion 31o is adjusted to 10 µm or more and 30 µm or less, since the thickness, in the lamination (T) direction, of the outer-side outer layer portion 31o is greater than the thickness, in the lamination (T) direction, of the inner-side outer layer portion 31i, the outer-side outer layer portion 31o can contain a larger amount of calcium silicate than the inner-side outer layer portion 31i does.

Therefore, a balance between crystals formed in the outer-side outer layer portion 31o and the sintering aid content can be ensured. The outer-side outer layer portion 31o can ensure the balance between crystals formed in the outer-side outer layer portion 31o and the sintering aid content, thereby making it possible to ensure the denseness and sinterability of the outer-side outer layer portion 31o.

As a result, since a dense outer-side outer layer portion 31o can be formed while the sinterability of the outer-side outer layer portion 31o is ensured, moisture and the like are less likely to enter the outer-side outer layer portion 31o from the outside, and thus the multilayer ceramic capacitor 1 having high moisture resistance reliability can be provided.

Similarly, when the thickness, in the lamination (T) direction, of the inner-side outer layer portion 31i is adjusted to 5 µm or more and 20 µm or less, since the thickness, in the lamination (T) direction, of the inner-side outer layer portion 31i is smaller than the thickness, in the lamination (T) direction, of the outer-side outer layer portion 31o, the inner-side outer layer portion 31i can contain a smaller amount of calcium silicate than the outer-side outer layer portion 31o does.

Therefore, a balance between crystals formed in the inner-side outer layer portion 31i and the sintering aid content can be ensured. The inner-side outer layer portion 31i can ensure the balance between crystals formed in the inner-side outer layer portion 31i and the sintering aid content, thereby making it possible to ensure the denseness and sinterability of the inner-side outer layer portion 31i.

When the sinterability of the inner-side outer layer portion 31i can be ensured, pores are less likely to remain in a region close to the internal layer portion 30.

As a result, since the pores are less likely to remain in a region of the inner-side outer layer portion 31i close to the internal layer portion 30, moisture and the like are less likely to enter from the outside. Thus, a dense inner-side outer layer portion 31i can be formed while ensuring sinterability, thereby making it possible to provide a multilayer ceramic capacitor 1 having high moisture resistance reliability.

The thickness of the first outer layer portion 31 after firing is preferably 15 µm or more and 40 µm or less.

Similarly, the second outer layer portion 32 can have a two-layer structure stacked in the lamination (T) direction, and can include the outer-side outer layer portion 32o located on the second main surface 12 side and the inner-side outer layer portion 32i located closer to the internal layer portion 30 than the outer-side outer layer portion 32o is.

The second outer layer portion 32 can have a two-layer structure stacked in the lamination (T) direction, and can include the outer-side outer layer portion 32o located on the second main surface 12 side and the inner-side outer layer portion 32i located closer to the internal layer portion 30 than the outer-side outer layer portion 32o is.

The thicknesses, in the lamination (T) direction, of the outer-side outer layer portion 32o and the inner-side outer layer portion 32i that constitute the first outer layer portion 32 may be substantially the same, and the thicknesses, in the lamination (T) direction, of the outer-side outer layer portion 32o and the inner-side outer layer portion 32i may be different.

The thicknesses, in the lamination (T) direction, of the outer-side outer layer portion 32o and the inner-side outer layer portion 32i that constitute the second outer layer portion 32 may be substantially the same, and the thicknesses, in the lamination (T) direction, of the outer-side outer layer portion 32o and the inner-side outer layer portion 32i may be different.

The thickness, in the lamination direction, of the outer-side outer layer portion 32o is preferably greater than the thickness of the inner-side outer layer portion 32i. Specifically, the thickness, in the lamination (T) direction, of the outer-side outer layer portion 32o is preferably 10 µm or more and 30 µm or less.

When the thickness, in the lamination (T) direction, of the outer-side outer layer portion 32o is less than 10 µm, the outer-side outer layer portion 32o does not contain a sufficient amount of calcium silicate in some cases.

When the outer-side outer layer portion 32o does not contain a sufficient amount of calcium silicate, crystals may be formed in a small amount in the outer-side outer layer portion 32o.

When crystals are formed in a small amount in the outer-side outer layer portion 32o, an area occupied by crystals contained in the outer-side outer layer portion 32o decreases, and an area occupied by a sintering aid in the outer-side outer layer portion 32o increases. That is, the sintering aid content of the outer-side outer layer portion 32o increases.

Since a sintering aid is weak against moisture and the like, when the sintering aid content of the outer-side outer layer portion 32o increases, moisture and the like may enter the outer-side outer layer portion 32o from the outside.

Therefore, when moisture and the like enter the internal layer portion 30 through the outer-side outer layer portion 32o, a short circuit occurs.

As a result, the moisture resistance reliability of the multilayer ceramic capacitor 1 may decrease.

When the thickness, in the lamination (T) direction, of the outer-side outer layer portion 32o is greater than 30 µm, the outer-side outer layer portion 32o may contain a large amount of calcium silicate.

When the outer-side outer layer portion 32o contains a large amount of calcium silicate, crystals may be formed in a large amount in the outer-side outer layer portion 32o. When crystals are formed in a large amount in the outer-side outer layer portion 32o, an area occupied by crystals contained in the outer-side outer layer portion 32o increases, and an area occupied by the sintering aid in the outer-side outer layer portion 32o decreases. That is, the sintering aid content of the outer-side outer layer portion 32o decreases.

The sintering aid contained in the outer-side outer layer portion 32o functions to improve the sinterability of the outer-side outer layer portion 32o during firing of the multilayer body 10; however, when the sintering aid content of the outer-side outer layer portion 32o decreases, the outer-side outer layer portion 32o is not sufficiently sintered; thus, the sinterability of the outer-side outer layer portion 32o cannot be ensured in some cases.

Therefore, in the outer-side outer layer portion 32o, a region of the outer-side outer layer portion 32o close to the internal layer portion 30, which is less likely to be affected by heat during firing, is insufficiently sintered, pores are likely to remain in the region of the outer-side outer layer portion 32o close to the internal layer portion 30, and moisture and the like may enter, from the outside, the pores in the region of the outer-side outer layer portion 32o close to the internal layer portion 30.

As a result, when moisture and the like enter the internal layer portion 30 through the pores in the region of the outer-side outer layer portion 32o close to the internal layer portion 30, a short circuit may occur; thus, the moisture resistance reliability of the multilayer ceramic capacitor 1 cannot be ensured in some cases.

The thickness, in the lamination (T) direction, of the inner-side outer layer portion 32i is preferably 5 µm or more and 20 µm or less.

When the thickness, in the lamination (T) direction, of the inner-side outer layer portion 32i is less than 5 µm, the inner-side outer layer portion 32i does not contain a sufficient amount of calcium silicate in some cases.

When the inner-side outer layer portion 32i does not contain a sufficient amount of calcium silicate, crystals may be formed in a small amount in the inner-side outer layer portion 32i.

When crystals are formed in a small amount in the inner-side outer layer portion 32i, an area occupied by crystals contained in the inner-side outer layer portion 32i decreases, and an area occupied by a sintering aid in the inner-side outer layer portion 32i increases. That is, the sintering aid content of the inner-side outer layer portion 32i increases.

Since a sintering aid is weak against moisture and the like, when the sintering aid content of the inner-side outer layer portion 32i increases, moisture and the like may enter the inner-side outer layer portion 32i from the outside.

Therefore, moisture and the like may enter the inner-side outer layer portion 32i from the outside, and when moisture and the like enter the internal layer portion 30 through the inner-side outer layer portion 32i, a short circuit occurs.

As a result, the moisture resistance reliability of the multilayer ceramic capacitor 1 may decrease.

When the thickness, in the lamination (T) direction, of the inner-side outer layer portion 32i is greater than 20 µm, the outer-side outer layer portion 32i may contain a large amount of calcium silicate.

When the inner-side outer layer portion 32i contains a large amount of calcium silicate, crystals may be formed in a large amount in the inner-side outer layer portion 32i. When crystals are formed in a large amount in the inner-side outer layer portion 32i, an area occupied by crystals contained in the inner-side outer layer portion 32i increases, and an area occupied by the sintering aid in the inner-side outer layer portion 32i decreases. That is, the sintering aid content of the inner-side outer layer portion 32i decreases.

The sintering aid contained in the inner-side outer layer portion 32i functions to improve the sinterability of the inner-side outer layer portion 32i during firing of the multilayer body 10. However, when the sintering aid content of the inner-side outer layer portion 32i decreases, the inner-side outer layer portion 32i is not sufficiently sintered; thus, the sinterability of the inner-side outer layer portion 32i cannot be ensured in some cases.

Therefore, in the inner-side outer layer portion 32i, a region of the inner-side outer layer portion 32i close to the internal layer portion 30, which is less likely to be affected by heat during firing, is insufficiently sintered, and pores are likely to remain in the region of the inner-side outer layer portion 32i close to the internal layer portion 30; moisture and the like may enter, from the outside, the pores in the region of the inner-side outer layer portion 32i close to the internal layer portion 30.

As a result, when moisture and the like enter the internal layer portion 30 through the pores in the region of the inner-side outer layer portion 32i close to the internal layer portion 30, a short circuit may occur; thus, the moisture resistance reliability of the multilayer ceramic capacitor 1 cannot be ensured in some cases.

Thus, when the thickness, in the lamination (T) direction, of the outer-side outer layer portion 32o is adjusted to 10 µm or more and 30 µm or less, since the thickness, in the lamination (T) direction, of the outer-side outer layer portion 32o is greater than the thickness, in the lamination (T) direction, of the inner-side outer layer portion 32i, the outer-side outer layer portion 32o can contain a larger amount of calcium silicate than the inner-side outer layer portion 32i does.

Therefore, a balance between crystals formed in the outer-side outer layer portion 32o and the sintering aid content can be ensured. The outer-side outer layer portion 32o can ensure the balance between crystals formed in the outer-side outer layer portion 32o and the sintering aid content, thereby making it possible to ensure the denseness and sinterability of the outer-side outer layer portion 32o.

As a result, since a dense outer-side outer layer portion 32o can be formed while the sinterability of the outer-side outer layer portion 32o is ensured, moisture and the like are less likely to enter the outer-side outer layer portion 32o from the outside, thus making it possible to provide the multilayer ceramic capacitor 1 having high moisture resistance reliability.

Similarly, when the thickness, in the lamination (T) direction, of the inner-side outer layer portion 32i is adjusted to 5 µm or more and 20 µm or less, since the thickness, in the lamination (T) direction, of the inner-side outer layer portion 32i is smaller than the thickness, in the lamination (T) direction, of the outer-side outer layer portion 32o, the inner-side outer layer portion 32i can contain a smaller amount of calcium silicate than the outer-side outer layer portion 32o does.

Therefore, a balance between crystals formed in the inner-side outer layer portion 32i and the sintering aid content can be ensured. The inner-side outer layer portion 32i can ensure the balance between crystals formed in the inner-side outer layer portion 32i and the sintering aid content, thereby making it possible to ensure the denseness and sinterability of the inner-side outer layer portion 32i.

When the sinterability of the inner-side outer layer portion 32i can be ensured, pores are less likely to remain in a region close to the internal layer portion 30.

As a result, since the pores are less likely to remain in the region of the inner-side outer layer portion 32i close to the internal layer portion 30, moisture and the like are less likely to enter from the outside. Thus, a dense inner-side outer layer portion 32i can be formed while ensuring sinterability, thereby making it possible to provide the multilayer ceramic capacitor 1 having high moisture resistance reliability.

The thickness of the second outer layer portion 32 after firing is preferably 15 µm or more and 40 µm or less.

The dielectric layers forming the first outer layer portion 31 and the second outer layer portion 32 are made of a dielectric ceramic containing a perovskite-type compound that contains Ca and Zr. For such a dielectric ceramic, a powder obtained by mixing powders, such as CaCO₃, SrCO₃, BaCO₃, TiO₂, and ZrO₂, calcining the mixture, and then pulverizing the calcined mixture can be used as a ceramic raw material for the main component. To the ceramic raw material for the main component, sintering aids, such as Ca, Mn, Si, SiO₂, and MnCO₃, can be added, but are not limited thereto.

The calcium silicate content of the outer-side outer layer portions 31o and 32o located on the first main surface 11 side or the second main surface 12 side of the multilayer body 10 is greater than the calcium silicate content of the inner-side outer layer portions 31i and 32i located on the internal layer portion 30 side.

The outer-side outer layer portion 32i and the outer-side outer layer portion 32o have thicknesses, in the lamination (T) direction, greater than the thicknesses, in the lamination (T) direction, of the inner-side outer layer portions 31i and 32i, and are therefore likely to have a higher calcium silicate content than the inner-side outer layer portions 31i and 32i.

Therefore, a balance between crystals formed in the outer-side outer layer portions 31o and 32o, and the sintering aid content can be ensured.

As a result, since a dense outer-side outer layer portion 32o can be formed while the sinterability of the outer-side outer layer portion 32o is ensured, the multilayer ceramic capacitor 1 having high moisture resistance reliability can be provided.

The inner-side outer layer portions 31i and 32i have thicknesses, in the lamination (T) direction, smaller than the thicknesses, in the lamination (T) direction, of the outer-side outer layer portions 31o and 32o, and are therefore likely to have a lower calcium silicate content than the outer-side outer layer portions 31o and 32o.

Therefore, in the inner-side outer layer portions 31i and 32i, the balance between crystals formed in the inner-side outer layer portions 31i and 32i, and the sintering aid content can be ensured. As a result, sinterability higher than that of the outer-side outer layer portions 31o and 32o is ensured, and thus the pores are less likely to remain in a region close to the internal layer portion 30.

As a result, dense outer-side outer layer portions 31o and 32o and dense inner-side outer layer portions 31i and 32i are formed while ensuring sinterability, and since moisture and the like are less likely to enter, from the outside, the pores in a region close to the internal layer portion 30, the multilayer ceramic capacitor 1 having high moisture resistance reliability can be provided.

The calcium silicate content of the outer-side outer layer portions 31o and 32o located on the first main surface 11 side or the second main surface 12 side of the multilayer body 10 is more preferably 5 atom% or more and 30 atom% or less, relative to the calcium silicate content of the inner-side outer layer portions 31i and 32i located on the internal layer portion 30 side.

When the calcium silicate content of the outer-side outer layer portions 31o and 32o is less than 5 atom%, relative to the calcium silicate content of the inner-side outer layer portions 31i and 32i located on the internal layer portion 30 side, the outer-side outer layer portions 31o and 32o do not contain a sufficient amount of calcium silicate in some cases.

When the outer-side outer layer portions 31o and 32o do not contain a sufficient amount of calcium silicate, crystals may be formed in a small amount in the outer-side outer layer portions 31o and 32o.

When crystals are formed in a small amount in the outer-side outer layer portions 31o and 32o, an area occupied by crystals contained in the outer-side outer layer portions 31o and 32o decreases, and an area occupied by a sintering aid in the outer-side outer layer portions 31o and 32o increases. That is, the sintering aid content of the outer-side outer layer portions 31o and 32o increases.

Since a sintering aid is weak against moisture and the like, when the sintering aid content of the outer-side outer layer portions 31o and 32o increases, moisture and the like may enter the outer-side outer layer portions 31o and 32o from the outside.

Thus, moisture and the like may enter the outer-side outer layer portions 31o and 32o from the outside, and when moisture and the like enter the internal layer portion 30 through the outer-side outer layer portions 31o and 32o, a short circuit occurs.

As a result, the moisture resistance reliability of the multilayer ceramic capacitor 1 may decrease.

When the calcium silicate content of the outer-side outer layer portions 31o and 32o is more than 30 atom%, relative to the calcium silicate content of the inner-side outer layer portions 31i and 32i located on the internal layer portion 30 side, the outer-side outer layer portions 31o and 32o may contain a large amount of calcium silicate.

When the outer-side outer layer portions 31o and 32o contain a large amount of calcium silicate, crystals may be formed in a large amount in the outer-side outer layer portions 31o and 32o. When crystals are formed in a large amount in the outer-side outer layer portions 31o and 32o, an area occupied by crystals contained in the outer-side outer layer portions 31o and 32o increases, and an area occupied by the sintering aid in the outer-side outer layer portions 31o and 32o decreases. That is, the sintering aid content of the outer-side outer layer portions 31o and 32o decreases.

When the sintering aid content in the outer-side outer layer portions 31o and 32o decreases, the outer-side outer layer portions 31o and 32o are not sufficiently sintered; thus, the sinterability of the outer-side outer layer portions 31o and 32o cannot be ensured in some cases.

Therefore, pores are likely to remain in a region of the outer-side outer layer portions 31o and 32o close to the internal layer portion 30, and moisture and the like may enter, from the outside, the pores in the region close to the internal layer portion 30.

As a result, when moisture and the like enter the internal layer portion 30 through the pores in the region of the outer-side outer layer portions 31o and 32o close to the internal layer portion 30, a short circuit may occur; thus, the moisture resistance reliability of the multilayer ceramic capacitor 1 cannot be ensured in some cases.

Thus, the inner-side outer layer portions 31i and 32i have thicknesses, in the lamination (T) direction, smaller than the thicknesses, in the lamination (T) direction, of the outer-side outer layer portions 31o and 32o, and are therefore likely to have a lower calcium silicate content than the outer-side outer layer portions 31o and 32o.

Therefore, sinterability higher than that of the outer-side outer layer portions 31o and 32o is ensured while ensuring the balance between crystals formed in the inner-side outer layer portions 31i and 32i, and the sintering aid content; thus, pores are less likely to remain in a region close to the internal layer portion 30.

As a result, dense ceramic layers are formed while ensuring sinterability, and moisture and the like are less likely to enter, from the outside, the pores in the region close to the internal layer portion 30; therefore, a short circuit is less likely to occur, and the multilayer ceramic capacitor 1 having high moisture resistance reliability can be provided.

The two-layer structures of the first outer layer portion 31 and the second outer layer portion 32 can be recognized by observing an interface between layers using an optical microscope under dark-field observation, based on a difference in sinterability; however, depending on firing conditions, the outer-side outer layer portion 31o and the inner-side outer layer portion 31i, or the outer-side outer layer portion 32o and the inner-side outer layer portion 32i, may become integrated after firing, making it difficult to recognize the interface. If the calcium silicate content can be adjusted in the lamination (T) direction, it is not necessarily required that the first outer layer portion 31 and the second outer layer portion 32 each have a two-layer structure. That is, for the manufactured multilayer ceramic capacitor 1, in a WT cross section extending in the lamination (T) direction and the width (W) direction of the multilayer body 10, the calcium silicate content of the outer-side outer layer portion 31o is greater than the calcium silicate content of the inner-side outer layer portion 31i, and the calcium silicate content of the outer-side outer layer portion 32o located on the second main surface 12 side is greater than the calcium silicate content of the inner-side outer layer portion 32i located on the internal layer portion 30 side.

The outer-side outer layer portions 31o and 32o have thicknesses, in the lamination (T) direction, greater than the thicknesses, in the lamination (T) direction, of the inner-side outer layer portions 31i and 32i, and are therefore likely to have a higher calcium silicate content than the inner-side outer layer portions 31i and 32i.

Therefore, a balance between crystals formed in the outer-side outer layer portions 31o and 32o, and the sintering aid content is achieved, thus facilitating the formation of denser outer-side outer layer portions 31o and 32o.

As a result, the dense outer-side outer layer portions 31o and 32o are formed while ensuring sinterability, thereby making it possible to provide the multilayer ceramic capacitor 1 that is less likely to cause a short circuit and has high moisture resistance reliability.

The inner-side outer layer portions 31i and 32i have thicknesses in the lamination (T) direction smaller than the thicknesses in the lamination (T) direction of the outer-side outer layer portions 31o and 32o, and are therefore likely to have a lower calcium silicate content than the outer-side outer layer portions 31o and 32o.

Therefore, sinterability higher than that of the outer-side outer layer portions 31o and 32o is ensured while ensuring the balance between crystals formed in the inner-side outer layer portions 31i and 32i, and the sintering aid content; thus, pores are less likely to remain in a region close to the internal layer portion 30.

As a result, dense inner-side outer layer portions 31i and 32i are formed while ensuring sinterability, and moisture and the like are less likely to enter, from the outside, the pores in a region close to the internal layer portion 30; therefore, a short circuit is less likely to occur, and the multilayer ceramic capacitor 1 having high moisture resistance reliability can be provided.

The calcium silicate content of the outer-side outer layer portion 31o located on the first main surface 11 side is preferably 5 atom% or more and 30 atom% or less, relative to the calcium silicate content of the inner-side outer layer portion 31i located on the internal layer portion 30 side.

Adjusting the calcium silicate content in the lamination (T) direction of the first outer layer portion 31 in this manner is likely to result in a higher calcium silicate content than that of the inner-side outer layer portion 31i.

Therefore, a balance between crystals formed in the outer-side outer layer portion 31o and the sintering aid content is achieved, and thus the outer-side outer layer portion 31o is likely to be formed as a denser layer portion.

As a result, a denser outer-side outer layer portion 31o is formed while ensuring sinterability, thereby making it possible to provide the multilayer ceramic capacitor 1 that is less likely to cause a short circuit and has higher moisture resistance reliability.

The calcium silicate content of the outer-side outer layer portion 32o located on the second main surface 12 side is preferably 5 atom% or more and 30 atom% or less, relative to the calcium silicate content of the inner-side outer layer portion 32i located on the internal layer portion 30 side.

Adjusting the calcium silicate content in the lamination (T) direction of the first outer layer portion 32 in this manner is likely to result in a higher calcium silicate content than that of the inner-side outer layer portion 32i.

Therefore, a balance between crystals formed in the outer-side outer layer portion 32o and the sintering aid content is achieved, and thus a denser outer-side outer layer portion 32o is likely to be formed.

As a result, the denser outer-side outer layer portion 32o is formed while ensuring sinterability, thereby making it possible to provide the multilayer ceramic capacitor 1 that is less likely to cause a short circuit and has higher moisture resistance reliability.

### (Method for Measuring Thicknesses, in Lamination (T) Direction, of Inner-Side Outer Layer Portions 31i and 32i and Outer-Side Outer Layer Portions 31o and 32o)

The thicknesses, in the lamination (T) direction, of the inner-side outer layer portions 31i and 32i and the outer-side outer layer portions 31o and 32o can be determined from results obtained by a wavelength-dispersive X-ray analyzer (hereinafter referred to as "WDX").

The thicknesses, in the lamination (T) direction, of the inner-side outer layer portions 31i and 32i and the outer-side outer layer portions 31o and 32o refer to average values obtained when measurements are performed at a plurality of locations of the first outer layer portion 31 and the second outer layer portion 32 along the lamination (T) direction.

Specifically, first, cross-section polishing is performed from the first side surface or the second side surface of the multilayer ceramic capacitor to a central portion in the width direction of the multilayer ceramic capacitor, thereby exposing an LT cross section.

Then, the first outer layer portion 31 and the second outer layer portion 32 are observed by WDX.

Observation conditions at this time are as follows: observation is performed at a magnification of 1000× and an accelerating voltage of 5 kV, and images are captured with a field of view of 50 µm × 50 µm at three locations, i.e., a left end portion, a right end portion, and a central portion of the first outer layer portion 31 and the second outer layer portion 32.

From the results of images captured under the above observation conditions and subjected to elemental mapping analysis by WDX, the thickness, in the lamination (T) direction, of the outer-side outer layer portion 31o is determined by measuring, using the scale in the image data subjected to the elemental mapping analysis, distances from the first main surface 11 side and the second main surface 12 side toward the internal layer portion 30 to locations where calcium silicate is contained in the greatest amount, at each of the left end portion, the right end portion, and the central portion in the length (L) direction of the first outer layer portion 31 and the second outer layer portion 32, and calculating the average value thereof.

The thickness, in the lamination (T) direction, of the outer-side outer layer portion 32o is also determined by the same measurement method.

The thickness, in the lamination (T) direction, of the inner-side outer layer portion 31i is determined by measuring, using the scale in the image data subjected to the elemental mapping analysis, a distance from a portion of the thickness, in the lamination (T) direction, of the outer-side outer layer portion 31o that is closest to the internal layer portion 30 to the internal layer portion 30, and calculating the average value thereof.

The thickness, in the lamination (T) direction, of the inner-side outer layer portion 32i is also determined by the same measurement method.

### (Specific Method for Measuring Calcium Silicate)

The calcium silicate content of the inner-side outer layer portions 31i and 32i located on the internal layer portion 30 side of the multilayer body 10 and the calcium silicate content of the outer-side outer layer portions 31o and 32o located on the first main surface 11 side or the second main surface 12 side can be determined from results of an elemental mapping analysis image obtained by WDX.

The calcium silicate content of the inner-side outer layer portions 31i and 32i and the outer-side outer layer portions 31o and 32o refer to an average value obtained by measuring the calcium silicate content at a plurality of locations in the inner-side outer layer portions 31i and 32i and the outer-side outer layer portions 31o and 32o along the lamination (T) direction.

Specifically, first, cross-section polishing is performed from the first side surface or the second side surface of the multilayer ceramic capacitor to a central portion in the width direction of the multilayer ceramic capacitor to expose an LT cross section.

Then, the polished inner-side outer layer portions 31i and 32i and the outer-side outer layer portions 31o and 32o are observed by WDX.

Observation conditions are as follows: observation is performed at a magnification of 3000× and an accelerating voltage of 15 kV, and images are captured with a field of view of 50 µm × 50 µm at three locations, namely, a left end portion, a right end portion, and a central portion of the inner-side outer layer portions 31i and 32i and the outer-side outer layer portions 31o and 32o.

From the results of images captured under the above observation conditions and subjected to elemental mapping analysis by WDX, the calcium silicate content of the inner-side outer layer portions 31i and 32i is determined by measuring the calcium silicate content at the left end portion, the right end portion, and the central portion of the inner-side outer layer portions 31i and 32i and calculating an average value.

The calcium silicate content of the outer-side outer layer portions 31o and 32o is determined by measuring the calcium silicate content at the left end portion, the right end portion, and the central portion of the outer-side outer layer portions 31o and 32o and calculating an average value.

Similarly, for the manufactured multilayer ceramic capacitor 1, in a WT cross section of the multilayer body 10 extending in the lamination (T) direction and the width (W) direction, the Ca-Mn-Si-based oxide content of the inner-side outer layer portion 31i located on the internal layer portion 30 side is greater than the Ca-Mn-Si-based oxide content of the outer-side outer layer portion 31o located on the first main surface 11 side.

The Ca-Mn-Si-based oxide functions as a sintering aid during firing, and can ensure the sinterability of the inner-side outer layer portions 31i and 32i. Therefore, dense inner side margin portions 41i and 42i are easily formed. As a result, since moisture and the like are less likely to enter the inner-side outer layer portion 31i from the outside, the moisture resistance reliability of the multilayer ceramic capacitor 1 having high moisture resistance reliability can be provided.

The Ca-Mn-Si-based oxide content of the inner-side outer layer portion 31i located on the internal layer portion 30 side is preferably 2 atom% or more and 10 atom% or less, relative to the Ca-Mn-Si-based oxide content of the outer-side outer layer portion 31o located on the first main surface 11 side.

When the Ca-Mn-Si-based oxide content of the inner-side outer layer portion 31i is less than 2 atom%, relative to the Ca-Mn-Si-based oxide content of the outer-side outer layer portion 31o located on the first main surface 11 side, a sufficient amount of Ca-Mn-Si-based oxide is not contained in some cases.

When a sufficient amount of Ca-Mn-Si-based oxide is not contained, crystals may be formed in a large amount in the inner-side outer layer portion 31i.

When crystals are formed in a large amount in the inner-side outer layer portion 31i, an area occupied by crystals contained in the inner-side outer layer portion 31i increases, and an area occupied by the Ca-Mn-Si-based oxide in the inner-side outer layer portion 31i decreases. That is, the Ca-Mn-Si-based oxide content in the inner-side outer layer portion 31i decreases. The Ca-Mn-Si-based oxide functions as a sintering aid for the inner-side outer layer portion 31i; however, when the Ca-Mn-Si-based oxide content in the inner-side outer layer portion 31i decreases, the inner-side outer layer portion 31i is not sufficiently sintered, and thus the sinterability of the inner-side outer layer portion 31i cannot be ensured in some cases.

When the sinterability of the inner-side outer layer portion 31i cannot be ensured, pores are likely to remain in a region of the inner-side outer layer portion 31i close to the internal layer portion 30, and moisture and the like may enter, from the outside, the pores in the region of the inner-side outer layer portion 31i close to the internal layer portion 30.

As a result, when moisture and the like enter, from the outside, the pores in the region of the inner-side outer layer portion 31i close to the internal layer portion 30, a short circuit may occur, and the moisture resistance reliability of the multilayer ceramic capacitor 1 cannot be ensured in some cases.

When the Ca-Mn-Si-based oxide content of the inner-side outer layer portion 31i is more than 10 atom%, relative to the Ca-Mn-Si-based oxide content of the outer-side outer layer portion 31o located on the first main surface 11 side, an area occupied by the Ca-Mn-Si-based oxide contained in the inner-side outer layer portion 31i increases, and an area occupied by crystals in the inner-side outer layer portion 31i decreases. That is, the Ca-Mn-Si-based oxide content in the inner-side outer layer portion 31i increases.

When the Ca-Mn-Si-based oxide content in the inner-side outer layer portion 31i increases, a difference in shrinkage behavior during firing may occur between the inner-side outer layer portion 31i and the outer-side outer layer portion 31o.

Therefore, due to the difference in shrinkage behavior during firing between the inner-side outer layer portion 31i and the outer-side outer layer portion 31o, cracks may be formed between layers of the inner-side outer layer portion 31i and the outer-side outer layer portion 31o.

As a result, when cracks are formed between layers of the inner-side outer layer portion 31i and the outer-side outer layer portion 31o, and moisture and the like enter from the outside through the cracks, a short circuit may occur, and the moisture resistance reliability of the multilayer ceramic capacitor 1 cannot be ensured in some cases.

Thus, in the lamination (T) direction of the first outer layer portion 31, the Ca-Mn-Si-based oxide content of the inner-side outer layer portion 31i is adjusted to 2 atom% or more and 10 atom% or less, relative to the Ca-Mn-Si-based oxide content of the outer-side outer layer portion 31o located on the first main surface 11 side, thereby making it possible to easily achieve a balance between formation of crystals and the sintering aid content in the inner-side outer layer portion 31i.

Therefore, the sinterability of the inner-side outer layer portion 31i can be further ensured, and a denser inner-side outer layer portion 31o can be formed, thereby making it possible to provide the multilayer ceramic capacitor 1 having high moisture resistance reliability.

Similarly, for the manufactured multilayer ceramic capacitor 1, in a WT cross section of the multilayer body 10 extending in the lamination (T) direction and the width (W) direction, the Ca-Mn-Si-based oxide content of the inner-side outer layer portion 32i located on the internal layer portion 30 side is greater than the Ca-Mn-Si-based oxide content of the outer-side outer layer portion 32o located on the second main surface 12 side.

The Ca-Mn-Si-based oxide content of the inner-side outer layer portion 32i located on the internal layer portion 30 side is preferably 2 atom% or more and 10 atom% or less, relative to the Ca-Mn-Si-based oxide content of the outer-side outer layer portion 32o located on the second main surface 12 side.

When the Ca-Mn-Si-based oxide content of the inner-side outer layer portion 32i is less than 2 atom%, relative to the Ca-Mn-Si-based oxide content of the outer-side outer layer portion 32o located on the second main surface 12 side, a sufficient amount of Ca-Mn-Si-based oxide is not contained in some cases.

When a sufficient amount of Ca-Mn-Si-based oxide is not contained, crystals may be formed in a large amount in the inner-side outer layer portion 32i.

When crystals are formed in a large amount in the inner-side outer layer portion 32i, an area occupied by crystals contained in the inner-side outer layer portion 32i increases, and an area occupied by the Ca-Mn-Si-based oxide in the inner-side outer layer portion 32i decreases. That is, the Ca-Mn-Si-based oxide content in the inner-side outer layer portion 32i decreases. The Ca-Mn-Si-based oxide functions as a sintering aid for the inner-side outer layer portion 32i; however, when the Ca-Mn-Si-based oxide content in the inner-side outer layer portion 32i decreases, the inner-side outer layer portion 32i is not sufficiently sintered; thus, the sinterability of the inner-side outer layer portion 32i cannot be ensured in some cases.

Therefore, pores are likely to remain in a region of the inner-side outer layer portion 32i close to the internal layer portion 30, and moisture and the like may enter, from the outside, the pores in the region of the inner-side outer layer portion 32i close to the internal layer portion 30.

As a result, when moisture and the like enter, from the outside, the pores in the region of the inner-side outer layer portion 32i close to the internal layer portion 30, a short circuit may occur; thus, the moisture resistance reliability of the multilayer ceramic capacitor 1 cannot be ensured in some cases.

When the Ca-Mn-Si-based oxide content of the inner-side outer layer portion 32i is more than 10 atom%, relative to the Ca-Mn-Si-based oxide content of the outer-side outer layer portion 32o located on the second main surface 12 side, an area occupied by the Ca-Mn-Si-based oxide contained in the inner-side outer layer portion 32i increases, and an area occupied by crystals in the inner-side outer layer portion 32i decreases. That is, the Ca-Mn-Si-based oxide content in the inner-side outer layer portion 32i increases.

When the Ca-Mn-Si-based oxide content in the inner-side outer layer portion 32i increases, a difference in shrinkage behavior during firing may occur between the inner-side outer layer portion 32i and the outer-side outer layer portion 32o.

Therefore, due to the difference in shrinkage behavior during firing between the inner-side outer layer portion 32i and the outer-side outer layer portion 32o, cracks may be formed between layers of the inner-side outer layer portion 32i and the outer-side outer layer portion 32o.

When cracks are formed between layers of the inner-side outer layer portion 32i and the outer-side outer layer portion 32o, and moisture and the like enter from the outside through the cracks, the moisture resistance reliability of the multilayer ceramic capacitor 1 cannot be ensured in some cases.

Thus, in the lamination (T) direction of the second outer layer portion 32, the Ca-Mn-Si-based oxide content of the inner-side outer layer portion 32i is adjusted to 2 atom% or more and 10 atom% or less, relative to the Ca-Mn-Si-based oxide content of the outer-side outer layer portion 32o located on the second main surface 12 side, thereby making it possible to easily achieve a balance between formation of crystals and the Ca-Mn-Si-based oxide content in the inner-side outer layer portion 32i. Therefore, the sinterability of the inner-side outer layer portion 32i can be further ensured, and a denser inner-side outer layer portion 32o can be more easily formed.

Therefore, the moisture resistance reliability of the multilayer ceramic capacitor 1 can be further improved.

### (Specific Measurement Method for Ca-Mn-Si-Based Oxide)

The Ca-Mn-Si-based oxide content of the inner-side outer layer portions 31i and 32i located on the internal layer portion 30 side of the multilayer body 10, and the Ca-Mn-Si-based oxide content of the outer-side outer layer portions 31o and 32o located on the first main surface 11 side or the second main surface 12 side can be determined from results of images obtained by elemental mapping analysis using WDX.

The Ca-Mn-Si-based oxide content of the inner-side outer layer portions 31i and 32i refers to an average value obtained by measuring the Ca-Mn-Si-based oxide content at a plurality of locations in the inner-side outer layer portions 31i and 32i along the lamination (T) direction and by measuring the Ca-Mn-Si-based oxide content at a plurality of locations in the outer-side outer layer portions 31o and 32o.

Specifically, first, cross-sectional polishing is performed from a first side surface or a second side surface of the multilayer ceramic capacitor to a central portion of the multilayer ceramic capacitor in the width direction, thereby exposing an LT cross section.

Then, the polished inner-side outer layer portions 31i and 32i and the polished outer-side outer layer portions 31o and 32o are observed by WDX.

Observation conditions at this time are as follows: observation is performed at a magnification of 3000× and an accelerating voltage of 15 kV, and images are captured with a field of view of 50 µm × 50 µm at three locations, i.e., a left end portion, a right end portion, and a central portion, of each of the inner-side outer layer portions 31i and 32i and the outer-side outer layer portions 31o and 32o.

From the results of images captured under the above observation conditions and subjected to elemental mapping analysis by WDX, the Ca-Mn-Si-based oxide content of the inner-side outer layer portion 31i and the outer-side outer layer portion 32i is determined by measuring the Ca-Mn-Si-based oxide content at the left end portion, the right end portion, and the central portion of each of the inner-side outer layer portions 31i and 32i and by calculating an average value.

Similarly, the Ca-Mn-Si-based oxide content of the outer-side outer layer portions 31o and 32o is determined by measuring the Ca-Mn-Si-based oxide content at the left end portion, the right end portion, and the central portion of each of the outer-side outer layer portions 31o and 32o and by calculating an average value.

The first side margin portion 41 and the second side margin portion 42 are provided to sandwich the internal layer portion 30 from the width (W) direction. The first side margin portion 41 is located on the first side surface 13 side of the multilayer body 10, and the second side margin portion 42 is located on the second side surface 14 side of the multilayer body 10.

The first side margin portion 41 can have a two-layer structure stacked in the width (W) direction, and
can include an outer side margin portion 41o located on the first side surface 13 side and an inner side margin portion 41i located closer to the internal layer portion 30 than the outer side margin portion 41o is.

The thicknesses, in the width (W) direction, of the outer side margin portion 41o and the inner side margin portion 41i may be substantially the same, or may be different.

The thickness, in the width direction, of the outer side margin portion 41o is preferably greater than the thickness, in the width direction, of the inner side margin portion 41i. Specifically, the thickness, in the width (W) direction, of the outer side margin portion 41o is preferably 3 µm or more and 20 µm or less.

When the thickness, in the width (W) direction, of the outer side margin portion 41o is less than 3 µm, the outer side margin portion 41o does not contain a sufficient amount of calcium silicate in some cases.

When the outer side margin portion 41o does not contain a sufficient amount of calcium silicate, crystals may be formed in a small amount in the outer side margin portion 41o.

When crystals are formed in a small amount in the outer side margin portion 41o, an area occupied by crystals contained in the outer side margin portion 41o decreases, and an area occupied by a sintering aid in the outer side margin portion 41o increases. That is, the sintering aid content of the outer side margin portion 41o increases.

Since a sintering aid is weak against moisture and the like, when the sintering aid content of the outer side margin portion 41o increases, when the sintering aid content of the outer side margin portion 41o increases, the outer side margin portion 41o becomes weak against moisture and the like. Therefore, moisture and the like may enter the outer side margin portion 41o from the outside.

As a result, when moisture and the like enter the internal layer portion 30 through the outer side margin portion 41o, a short circuit may occur; thus, the moisture resistance reliability of the multilayer ceramic capacitor 1 may decrease.

When the thickness, in the width (W) direction, of the outer side margin portion 41o is greater than 20 µm, the outer side margin portion 41o may contain a large amount of calcium silicate.

When the outer side margin portion 41o contains a large amount of calcium silicate, crystals may be formed in a large amount in the outer side margin portion 41o. When crystals are formed in a large amount in the outer side margin portion 41o, an area occupied by crystals contained in the outer side margin portion 41o increases, and an area occupied by a sintering aid in the outer side margin portion 41o decreases. That is, the sintering aid content of the outer side margin portion 41o decreases.

When the sintering aid content of the outer side margin portion 41o decreases, the outer side margin portion 41o is not sufficiently sintered; thus, the sinterability of the outer side margin portion 41o cannot be ensured in some cases.

Therefore, pores are likely to remain in a region of the outer side margin portion 41o close to the internal layer portion 30, and moisture and the like may enter, from the outside, the pores in the region of the outer side margin portion 41o close to the internal layer portion 30.

As a result, when moisture and the like enter the internal layer portion 30 through the pores in the region of the outer side margin portion 41o close to the internal layer portion 30, a short circuit may occur; thus, the moisture resistance reliability of the multilayer ceramic capacitor 1 cannot be ensured in some cases.

The thickness, in the width (W) direction, of the inner side margin portion 41i is preferably 2 µm or more and 20 µm or less.

When the thickness, in the width (W) direction, of the inner side margin portion 41i is less than 2 µm, the inner side margin portion 41i does not contain a sufficient amount of calcium silicate in some cases.

When the inner side margin portion 41i does not contain a sufficient amount of calcium silicate, crystals may be formed in a small amount in the inner side margin portion 41i.

When crystals are formed in a small amount in the inner side margin portion 41i, an area occupied by crystals contained in the inner side margin portion 41i decreases, and an area occupied by a sintering aid in the inner side margin portion 41i increases. That is, the sintering aid content of the inner side margin portion 41i increases.

Since a sintering aid is weak against moisture and the like, when the sintering aid content of the inner side margin portion 41i increases, when the sintering aid content of the inner side margin portion 41i increases, the inner side margin portion 41i becomes weak against moisture and the like. Therefore, moisture and the like may enter the inner side margin portion 41i from the outside.

As a result, when moisture and the like enter the internal layer portion 30 through the inner side margin portion 41i, a short circuit may occur; thus, the moisture resistance reliability of the multilayer ceramic capacitor 1 may decrease.

When the thickness, in the width (W) direction, of the inner side margin portion 41i is greater than 20 µm, the inner side margin portion 41i may contain a large amount of calcium silicate.

When the inner side margin portion 41i contains a large amount of calcium silicate, crystals may be formed in a large amount in the inner side margin portion 41i. When crystals are formed in a large amount in the inner side margin portion 41i, an area occupied by crystals contained in the inner side margin portion 41i increases, and an area occupied by a sintering aid in the inner side margin portion 41i decreases. That is, the sintering aid content of the inner side margin portion 41i decreases.

When the sintering aid content of the inner side margin portion 41i decreases, the inner side margin portion 41i is not sufficiently sintered; thus, the sinterability of the inner side margin portion 41i cannot be ensured in some cases.

Therefore, pores are likely to remain in a region of the inner side margin portion 41i close to the internal layer portion 30, and moisture and the like may enter, from the outside, the pores in the region of the inner side margin portion 41i close to the internal layer portion 30.

As a result, when moisture and the like enter the internal layer portion 30 through the pores in the region of the inner side margin portion 41i close to the internal layer portion 30, a short circuit may occur; thus, the moisture resistance reliability of the multilayer ceramic capacitor 1 cannot be ensured in some cases.

Therefore, when the thickness, in the width (W) direction, of the outer side margin portion 41o is set to 3 µm or more and 20 µm or less and the thickness, in the width (W) direction, of the inner side margin portion 41i is set to 2 µm or more and 20 µm or less, a balance is achieved between crystals formed in the outer side margin portions 41o and 42o and the inner side margin portions 41i and 42i, and the sintering aid content, thus facilitating the formation of a denser outer side margin portion 41o.

As a result, the dense outer side margin portion 41o is formed while ensuring sinterability, making it possible to provide a multilayer ceramic capacitor 1 having higher moisture resistance reliability.

The second side margin portion 42 can have a two-layer structure stacked in the width (W) direction, and includes an outer side margin portion 42o located on the second side surface 14 side and an inner side margin portion 42i located closer to the internal layer portion 30 than the outer side margin portion 42o is.

The thicknesses, in the width (W) direction, of the outer side margin portion 42o and the inner side margin portion 42i may be substantially the same or may be different.

The thickness, in the width direction, of the outer side margin portion 42o is preferably greater than the thickness, in the width direction, of the inner side margin portion 42i. Specifically, the thickness, in the width (W) direction, of the outer side margin portion 42o is preferably 3 µm or more and 20 µm or less.

When the thickness, in the width (W) direction, of the outer side margin portion 42o is less than 3 µm, the outer side margin portion 42o does not contain a sufficient amount of calcium silicate in some cases.

When the outer side margin portion 42o does not contain a sufficient amount of calcium silicate, crystals may be formed in a small amount in the outer side margin portion 42o.

When crystals are formed in a small amount in the outer side margin portion 42o, an area occupied by crystals contained in the outer side margin portion 42o decreases, and an area occupied by a sintering aid in the outer side margin portion 42o increases. That is, the sintering aid content of the outer side margin portion 42o increases.

Since a sintering aid is weak against moisture and the like, when the sintering aid content of the outer side margin portion 42o increases, when the sintering aid content of the outer side margin portion 42o increases, the outer side margin portion 42o becomes weak against moisture and the like. Therefore, moisture and the like may enter the outer side margin portion 42o from the outside.

As a result, when moisture and the like enter the internal layer portion 30 through the outer side margin portion 42o, a short circuit may occur; thus, the moisture resistance reliability of the multilayer ceramic capacitor 1 may decrease.

When the thickness, in the width (W) direction, of the outer side margin portion 42o is greater than 20 µm, the outer side margin portion 42o may contain a large amount of calcium silicate.

When the outer side margin portion 42o contains a large amount of calcium silicate, crystals may be formed in a large amount in the outer side margin portion 42o. When crystals are formed in a large amount in the outer side margin portion 42o, an area occupied by crystals contained in the outer side margin portion 42o increases, and an area occupied by a sintering aid in the outer side margin portion 42o decreases. That is, the sintering aid content of the outer side margin portion 42o decreases.

When the sintering aid content of the outer side margin portion 42o decreases, the outer side margin portion 42o is not sufficiently sintered; thus, the sinterability of the outer side margin portion 42o cannot be ensured in some cases.

Therefore, pores are likely to remain in a region of the outer side margin portion 42o close to the internal layer portion 30, and moisture and the like may enter, from the outside, the pores in the region of the outer side margin portion 42o close to the internal layer portion 30.

As a result, when moisture and the like enter the internal layer portion 30 through the pores in the region of the outer side margin portion 42o close to the internal layer portion 30, a short circuit may occur; thus, the moisture resistance reliability of the multilayer ceramic capacitor 1 cannot be ensured in some cases.

The thickness, in the width (W) direction, of the inner side margin portion 42i is preferably 2 µm or more and 20 µm or less.

When the thickness, in the width (W) direction, of the inner side margin portion 42i is less than 2 µm, the inner side margin portion 42i does not contain a sufficient amount of calcium silicate in some cases.

When the inner side margin portion 42i does not contain a sufficient amount of calcium silicate, crystals may be formed in a small amount in the inner side margin portion 42i.

When crystals are formed in a small amount in the inner side margin portion 42i, an area occupied by crystals contained in the inner side margin portion 42i decreases, and an area occupied by a sintering aid in the inner side margin portion 42i increases. That is, the sintering aid content of the inner side margin portion 42i increases.

Since a sintering aid is weak against moisture and the like, when the sintering aid content of the inner side margin portion 42i increases, when the sintering aid content of the inner side margin portion 42i increases, the inner side margin portion 42i becomes weak against moisture and the like. Therefore, moisture and the like may enter the inner side margin portion 42i from the outside.

As a result, when moisture and the like enter the internal layer portion 30 through the inner side margin portion 42i, a short circuit may occur; thus, the moisture resistance reliability of the multilayer ceramic capacitor 1 may decrease.

When the thickness, in the width (W) direction, of the inner side margin portion 42i is greater than 20 µm, the inner side margin portion 42i may contain a large amount of calcium silicate.

When the inner side margin portion 42i contains a large amount of calcium silicate, crystals may be formed in a large amount in the inner side margin portion 42i. When crystals are formed in a large amount in the inner side margin portion 42i, an area occupied by crystals contained in the inner side margin portion 42i increases, and an area occupied by a sintering aid in the inner side margin portion 42i decreases. That is, the sintering aid content of the inner side margin portion 42i decreases.

When the sintering aid content of the inner side margin portion 42i decreases, the inner side margin portion 42i is not sufficiently sintered; thus, the sinterability of the inner side margin portion 42i cannot be ensured in some cases.

Therefore, pores are likely to remain in a region of the inner side margin portion 42i close to the internal layer portion 30, and moisture and the like may enter, from the outside, the pores in the region of the inner side margin portion 42i close to the internal layer portion 30.

As a result, when moisture and the like enter the internal layer portion 30 through the pores in the region of the inner side margin portion 42i close to the internal layer portion 30, a short circuit may occur; thus, the moisture resistance reliability of the multilayer ceramic capacitor 1 cannot be ensured in some cases.

Therefore, when the thickness, in the width (W) direction, of the outer side margin portion 42o is set to 3 µm or more and 20 µm or less and the thickness, in the width (W) direction, of the inner side margin portion 42i is set to 2 µm or more and 20 µm or less, a balance is achieved between crystals formed in the outer side margin portions 42o and 42o and the inner side margin portions 42i and 42i, and the sintering aid content, thus facilitating the formation of a denser outer side margin portion 42o.

As a result, the dense outer side margin portion 42o is formed while ensuring sinterability, making it possible to provide a multilayer ceramic capacitor 1 having higher moisture resistance reliability.

The dielectric layers forming the first side margin portion 41 and the second side margin portion 42 are made of a dielectric ceramic containing a perovskite-type compound that contains Ca and Zr. For such a dielectric ceramic, a powder obtained by mixing powders, such as CaCO₃, SrCO₃, BaCO₃, TiO₂, and ZrO₂, calcining the mixture, and then pulverizing the calcined mixture can be used as a ceramic raw material for the main component. To the ceramic raw material for the main component, sintering aids, such as Ca, Mn, Si, SiO₂, and MnCO₃, can be added, but are not limited thereto.

The calcium silicate content of the outer side margin portion 41o and the outer side margin portion 42o located on the first side surface 13 side or the second side surface 14 side of the multilayer body 10 is greater than the calcium silicate content of the inner side margin portions 41i and 42i located on the internal layer portion 30 side. Thus, when the calcium silicate content in the width (W) direction of the first side margin portion 41 and the second side margin portion 42 is adjusted in this manner, the calcium silicate content of the outer side margin portions 41o and 42o is likely to be higher than that of the inner side margin portions 41i and 42i.

Therefore, a balance can be achieved between crystals formed in the outer side margin portions 41o and 42o, and the sintering aid content, thus facilitating the formation of denser outer side margin portions 41o and 42o.

As a result, the denser side side margin portion 41o and outer side margin portion 42o can be formed while ensuring sinterability, making it possible to provide the multilayer ceramic capacitor 1 having high moisture resistance reliability.

The Ca-Mn-Si-based oxide content of the inner side margin portions 41i and 42i located on the internal layer portion 30 side is greater than the Ca-Mn-Si-based oxide content of the outer side margin portions 41o and 42o located on the first side surface 13 side or the second side surface 14 side of the multilayer body 10. Adjusting the Ca-Mn-Si-based oxide content in the width (W) direction of the first side margin portion 41 and the second side margin portion 42 in this manner is likely to result in the inner side margin portions 41i and 42i having a higher Ca-Mn-Si-based oxide content.

The Ca-Mn-Si-based oxide functions as a sintering aid during firing, and the sinterability of the inner side margin portions 41i and 42i can be ensured. Therefore, dense inner side margin portions 41i and 42i are more likely to be formed. As a result, moisture and the like are less likely to enter the inner-side outer layer portion 31i from the outside, thereby making it possible to improve the moisture resistance reliability of the multilayer ceramic capacitor 1.

The Ca-Mn-Si-based oxide content of the inner side margin portions 41i and 42i located on the internal layer portion 30 side is preferably 2 atom% or more and 10 atom% or less, relative to the Ca-Mn-Si-based oxide content of the outer side margin portions 41o and 42o located on the first side surface 13 side or the second side surface 14 side of the multilayer body 10.

When the Ca-Mn-Si-based oxide content of the inner side margin portions 41i and 42i is less than 2 atom%, relative to the Ca-Mn-Si-based oxide content of the outer side margin portions 41o and 42o located on the first side surface 13 side or the second side surface 14 side, a sufficient amount of Ca-Mn-Si-based oxide is not contained in some cases.

When a sufficient amount of Ca-Mn-Si-based oxide is not contained, crystals may be formed in a large amount in the inner side margin portions 41i and 42i.

When crystals are formed in a large amount in the inner side margin portions 41i and 42i, an area occupied by crystals contained in the inner side margin portions 41i and 42i increases, and an area occupied by the Ca-Mn-Si-based oxide in the inner side margin portions 41i and 42i decreases. That is, the Ca-Mn-Si-based oxide content in the inner side margin portions 41i and 42i decreases. The Ca-Mn-Si-based oxide functions as a sintering aid for the inner side margin portions 41i and 42i; however, when the Ca-Mn-Si-based oxide content in the inner side margin portions 41i and 42i decreases, the inner side margin portions 41i and 42i are not sufficiently sintered, and thus the sinterability of the inner side margin portions 41i and 42i cannot be ensured in some cases.

When the sinterability of the inner side margin portions 41i and 42i cannot be ensured, pores are likely to remain in regions of the inner side margin portions 41i and 42i close to the internal layer portion 30, and moisture and the like may enter, from the outside, the pores in the regions of the inner side margin portions 41i and 42i close to the internal layer portion 30.

As a result, when moisture and the like enter, from the outside, the pores in the regions of the inner side margin portions 41i and 42i close to the internal layer portion 30, a short circuit occurs, and the moisture resistance reliability of the multilayer ceramic capacitor 1 cannot be ensured in some cases.

When the Ca-Mn-Si-based oxide content of the inner side margin portions 41i and 42i is more than 10 atom%, relative to the Ca-Mn-Si-based oxide content of the outer side margin portions 41o and 42o located on the first side surface 13 side or the second side surface 14 side, an area occupied by the Ca-Mn-Si-based oxide contained in the inner side margin portions 41i and 42i increases, and an area occupied by crystals in the inner side margin portions 41i and 42i decreases. That is, the Ca-Mn-Si-based oxide content in the inner side margin portions 41i and 42i increases.

When the Ca-Mn-Si-based oxide content in the inner side margin portions 41i and 42i increases, a difference in shrinkage behavior during firing may occur between the inner side margin portions 41i and 42i and the outer side margin portions 41o and 42o.

Therefore, due to the difference in shrinkage behavior during firing between the inner side margin portions 41i and 42i and the outer side margin portions 41o and 42o, cracks may be formed between layers of the inner side margin portions 41i and 42i and the outer side margin portions 41o and 42o.

As a result, when cracks are formed between layers of the inner side margin portions 41i and 42i and the outer side margin portions 41o and 42o, and moisture and the like enter from the outside through the cracks, a short circuit may occur, and the moisture resistance reliability of the multilayer ceramic capacitor 1 cannot be ensured in some cases.

Thus, in the width (W) direction of the first side margin portion 41 and the second side margin portion 42, the Ca-Mn-Si-based oxide content of the inner side margin portions 41i and 42i is adjusted to 2 atom% or more and 10 atom% or less, relative to the Ca-Mn-Si-based oxide content of the outer side margin portions 41o and 42o located on the first side surface 13 side and the second side surface 14 side, thereby making it possible to easily achieve a balance between formation of crystals and the sintering aid content in the inner side margin portions 41i and 42i.

Therefore, the sinterability of the inner side margin portions 41i and 42i can be further ensured, and a denser inner side margin portion 41i can be formed, thereby making it possible to provide the multilayer ceramic capacitor 1 having high moisture resistance reliability.

The two-layer structures of the first side margin portion 41 and the second side margin portion 42 can be recognized by observing an interface between layers using an optical microscope under dark-field observation, based on a difference in sinterability; however, depending on firing conditions, the outer side margin portion 41o and the inner side margin portion 41i, or the outer side margin portion 42o and the inner side margin portion 42i, may become integrated after firing, making it difficult to recognize the interface. If the calcium silicate content can be adjusted in the width (W) direction, it is not necessarily required that the first side margin portion 41 and the second side margin portion 42 each have a two-layer structure. That is, for the manufactured multilayer ceramic capacitor 1, in a WT cross section extending in the lamination (T) direction and the width (W) direction of the multilayer body 10, the calcium silicate content of the outer side margin portion 41o located on the first side surface 13 side is greater than the calcium silicate content of the inner side margin portion 41i located on the internal layer portion 30 side, and the calcium silicate content of the outer side margin portion 42o located on the second side surface 14 side is greater than the calcium silicate content of the inner side margin portion 42i located on the internal layer portion 30 side.

Therefore, a balance between crystals formed in the outer side margin portions 41o and 42o, and the sintering aid content is achieved, thus facilitating the formation of dense outer side margin portions 41o and 42o.

As a result, the dense outer side margin portions 41o and 42o are formed while ensuring sinterability, thereby making it possible to provide the multilayer ceramic capacitor 1 having high moisture resistance reliability.

### (Method for Measuring Thicknesses, in Width (W) Direction, of Inner Side Margin Portions 41i and 42i and Outer Side Margin Portions 41o and 42o)

The thicknesses, in the width (W) direction, of the inner side margin portions 41i and 42i and the outer side margin portions 41o and 42o can be determined from results obtained by WDX.

Specifically, first, cross-section polishing is performed from the first end surface or the second end surface of the multilayer ceramic capacitor to a central portion in the length direction of the multilayer ceramic capacitor, thereby exposing a WT cross section.

Then, the first side margin portion 41 and the second side margin portion 42 are observed by WDX.
Observation conditions at this time are as follows: observation is performed at a magnification of 2000× and an accelerating voltage of 15 kV, and images are captured with a field of view of 50 µm × 50 µm at three locations, i.e., a left end portion, a right end portion, and a central portion, in the width (W) direction of the first side margin portion 41 and the second side margin portion 42.

From the results of images captured under the above observation conditions and subjected to elemental mapping analysis by WDX, the thickness, in the width (W) direction, of the outer side margin portion 41o is determined by measuring, using the scale in the image data subjected to the elemental mapping analysis, distances from the first side surface 13 and the second side surface 14 toward the internal layer portion 30 to locations where calcium silicate is contained in the greatest amount, at each of an upper portion, a lower portion, and a central portion in the lamination (T) direction of the first side margin portion 41 and the second side margin portion 42, and calculating the average value thereof.

The thickness, in the width (W) direction, of the inner side margin portion 41i is determined by measuring, using the scale in the image data subjected to the elemental mapping analysis, a distance from a portion, in the width (W) direction, of the outer side margin portion 41i that is closest to the internal layer portion 30 to a side surface, in the width (W) direction, of the internal layer portion 30, and calculating an average value of measurements at an upper portion, a lower portion, and a central portion.

The thicknesses of the inner side margin portion 42i and the outer side margin portion 42o can also be determined by the same measurement method.

### (Specific Method for Measuring Calcium Silicate in Side Margin Portions)

The calcium silicate content of the inner side margin portions 41i and 42i located on the internal layer portion 30 side, and the calcium silicate content of the outer side margin portions 41o and 42o located on the first side surface 13 side or the second side surface 14 side of the multilayer body 10 can be determined from results of images obtained by elemental mapping analysis using WDX.

The calcium silicate content of the inner side margin portions 41i and 42i refers to an average value obtained when measurements are performed at a plurality of locations of the inner side margin portion 41i along the lamination (T) direction, and when measurements are performed at a plurality of locations of the outer side margin portions 41o and 42o. Specifically, first, cross-section polishing is performed from the first end surface or the second end surface of the multilayer ceramic capacitor to a central portion, in the length direction, of the multilayer ceramic capacitor, thereby exposing a WT cross section.

Then, the inner side margin portions 41i and 42i and the outer side margin portions 41o and 42o are observed by WDX.

Observation conditions at this time are as follows: observation is performed at a magnification of 2000× and an accelerating voltage of 15 kV, and images are captured with a field of view of 50 µm × 50 µm at an upper portion, a lower portion, and a central portion along the lamination (T) direction of the inner side margin portions 41i and 42i and the outer side margin portions 41o and 42o.

From the results of images captured under the above observation conditions and subjected to elemental mapping analysis by WDX, the calcium silicate content of the inner side margin portions 41i and 42i is determined by measuring the calcium silicate content at the upper portion, the lower portion, and the central portion along the lamination (T) direction of the inner side margin portions 41i and 42i, and calculating an average value.

The calcium silicate content of the outer side margin portions 41o and 42o is determined by capturing images under the above observation conditions, measuring the calcium silicate content at the upper portion, the lower portion, and the central portion along the lamination (T) direction of the outer side margin portions 41o and 42o, and calculating an average value.

### (Specific Method for Measuring Ca-Mn-Si-Based Oxide in Side Margin Portions)

The Ca-Mn-Si-based oxide content of the inner side margin portions 41i and 42i located on the internal layer portion 30 side, and the Ca-Mn-Si-based oxide content of the outer side margin portions 41o and 42o located on the first side surface 13 side or the second side surface 14 side of the multilayer body 10 can be determined from results of images obtained by elemental mapping analysis using WDX.

The Ca-Mn-Si-based oxide content of the inner side margin portions 41i and 42i refers to an average value obtained when measurements are performed at a plurality of locations of the inner side margin portion 41i along the lamination (T) direction, and when measurements are performed at a plurality of locations of the outer side margin portions 41o and 42o.

Specifically, first, cross-section polishing is performed from the first end surface or the second end surface of the multilayer ceramic capacitor to a central portion, in the length direction, of the multilayer ceramic capacitor, thereby exposing a WT cross section.

Then, the inner side margin portions 41i and 42i and the outer side margin portions 41o and 42o are observed by WDX.

Observation conditions at this time are as follows: observation is performed at a magnification of 2000× and an accelerating voltage of 15 kV, and images are captured with a field of view of 50 µm × 50 µm at an upper portion, a lower portion, and a central portion along the lamination (T) direction of the inner side margin portions 41i and 42i and the outer side margin portions 41o and 42o.

From the results of images captured under the above observation conditions and subjected to elemental mapping analysis by WDX, the Ca-Mn-Si-based oxide content of the inner side margin portions 41i and 42i is determined by measuring the Ca-Mn-Si-based oxide content at the upper portion, the lower portion, and the central portion along the lamination (T) direction of the inner side margin portions 41i and 42i, and calculating an average value.

The Ca-Mn-Si-based oxide content of the outer side margin portions 41o and 42o is determined by measuring the Ca-Mn-Si-based oxide content at the upper portion, the lower portion, and the central portion along the lamination (T) direction of the outer side margin portions 41o and 42o, and calculating an average value.

From results of images captured under the above observation conditions and subjected to elemental mapping analysis using WDX, the Ca-Mn-Si-based oxide content of the inner side margin portions 41i and 42i and the outer side margin portions 41o and 42o can be determined.

A method for manufacturing the multilayer ceramic capacitor 1 (first embodiment) will be described below.

Ceramic green sheets to be the dielectric layers 20, the first outer layer portion 31, the second outer layer portion 32, the first side margin portion 41, and the second side margin portion 42 are prepared.

The ceramic green sheets for forming the dielectric layers are made of a dielectric ceramic containing a perovskite-type compound that contains Ca and Zr. For such a dielectric ceramic, a powder obtained by mixing powders, such as CaCO₃, SrCO₃, BaCO₃, TiO₂, and ZrO₂, calcining the mixture, and then pulverizing the calcined mixture can be used as a ceramic raw material for the main component. To the ceramic raw material for the main component, SiO₂, MnCO₃, and the like can be added.

In addition to the above ceramic raw material, the ceramic green sheets contain a binder, a solvent, and the like. An additive containing a rare-earth element may be added to the ceramic raw material. By changing the elements contained in the additive, it is possible to alter the composition of the dielectric that forms each part. The ceramic raw material serving as the main component is preferably the same.

The ceramic green sheets are formed, for example, on a carrier film using a die coater, a gravure coater, a microgravure coater, or the like.

The dielectric layers of the inner-side outer layer portions 31i and 32i and the outer-side outer layer portions 31o and 32o that form the two-layer structures in the first outer layer portion 31 and the second outer layer portion 32 are made of a dielectric ceramic containing a perovskite-type compound that contains Ca and Zr. For such a dielectric ceramic, a powder obtained by mixing powders, such as CaCO₃, SrCO₃, BaCO₃, TiO₂, and ZrO₂, calcining the mixture, and then pulverizing the calcined mixture can be used as a ceramic raw material for the main component. To the ceramic raw material for the main component, SiO₂, MnCO₃, and the like can be added.

The ceramic green sheets for forming the inner-side outer layer portions 31i and 32i contain a larger amount of a Mn compound, such as MnCO₃, added than the ceramic green sheets for forming the outer-side outer layer portions 31o and 32o. The ceramic green sheets for forming the outer-side outer layer portions 31o and 32o contain a larger amount of SiO2 glass than the ceramic green sheets for forming the inner-side outer layer portions 31i and 32i.

Thus, in the manufactured multilayer ceramic capacitor 1, the calcium silicate content of the outer-side outer layer portions 31o and 32o is greater than the calcium silicate content of the inner-side outer layer portions 31i and 32i located on the internal layer portion 30 side. The Ca-Mn-Si-based oxide content of the inner-side outer layer portions 31i and 32i located on the internal layer portion 30 side is greater than the Ca-Mn-Si-based oxide content of the outer-side outer layer portions 31o and 32o. The calcium silicate content and the Ca-Mn-Si-based oxide content in the lamination (T) direction of the first outer layer portion 31 or the lamination (T) direction of the second outer layer portion 32 are adjusted, in this manner, to form dense outer-side outer layer portions 31o and 32o and dense inner-side outer layer portions 31i and 32i while ensuring sinterability, thereby providing the multilayer ceramic capacitor 1 having high moisture resistance reliability.

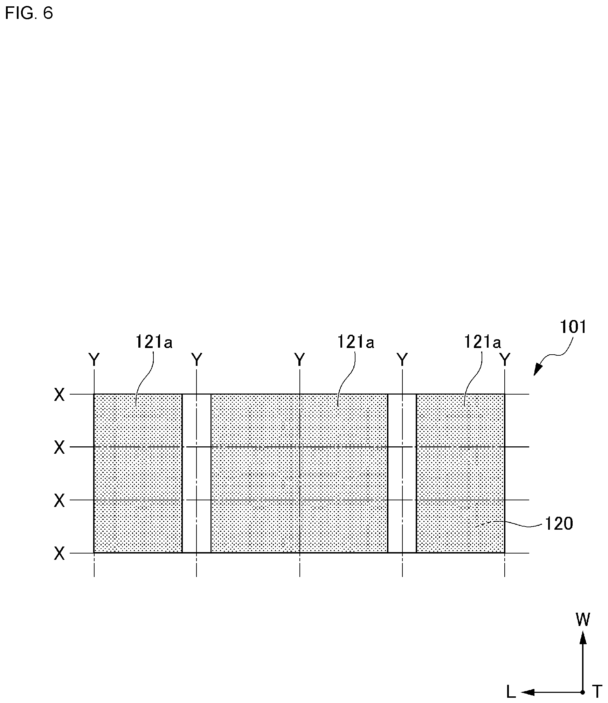

Figs. 6, 7, and 8 are each a plan view schematically illustrating an example of a ceramic green sheet. Figs. 6, 7, and 8 illustrate, respectively, a first ceramic green sheet 101 for forming the internal layer portion 30, a second ceramic green sheet 102 for forming the internal layer portion 30, and a third ceramic green sheet 103 for forming the first outer layer portion 31 and the second outer layer portion 32.

The first ceramic green sheet 101, the second ceramic green sheet 102, and the third ceramic green sheet 103 are marked with cut lines X and Y for cutting into individual multilayer ceramic capacitors 1. The cut lines X are parallel to the length (L) direction, and the cut lines Y are parallel to the width (W) direction.

As illustrated in Fig. 6, for the first ceramic green sheet 101, unfired first internal electrode layers 121a corresponding to the first internal electrode layers 21a are formed on an unfired dielectric layer 120 corresponding to the dielectric layer 20.

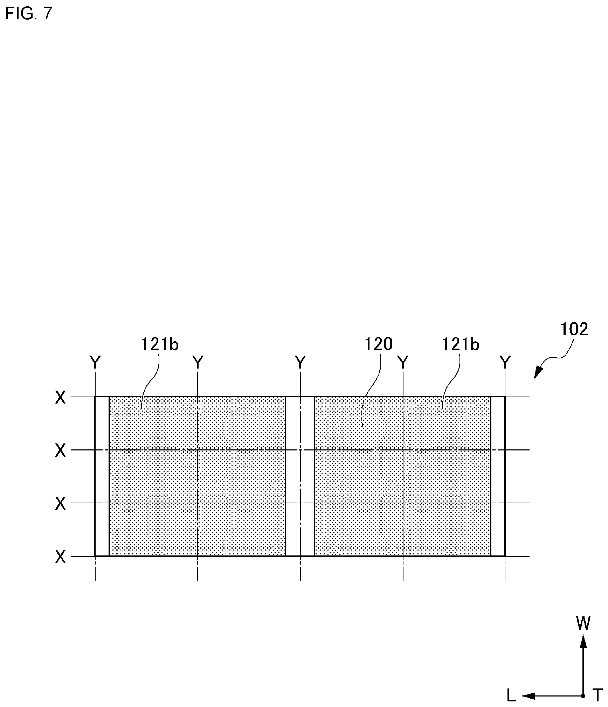

As illustrated in Fig. 7, for the second ceramic green sheet 102, unfired second internal electrode layers 121b corresponding to the second internal electrode layers 21b are formed on the unfired dielectric layer 120 corresponding to the dielectric layer 20.

A method for producing the first ceramic green sheet 101 illustrated in Fig. 6 and the second ceramic green sheet 102 illustrated in Fig. 7 is not particularly limited; however, an example thereof includes a method in which a conductive paste that becomes the first internal electrode layers 21a or the second internal electrode layers 21b by firing is applied to predetermined regions on the surfaces of the unfired dielectric layers 120.

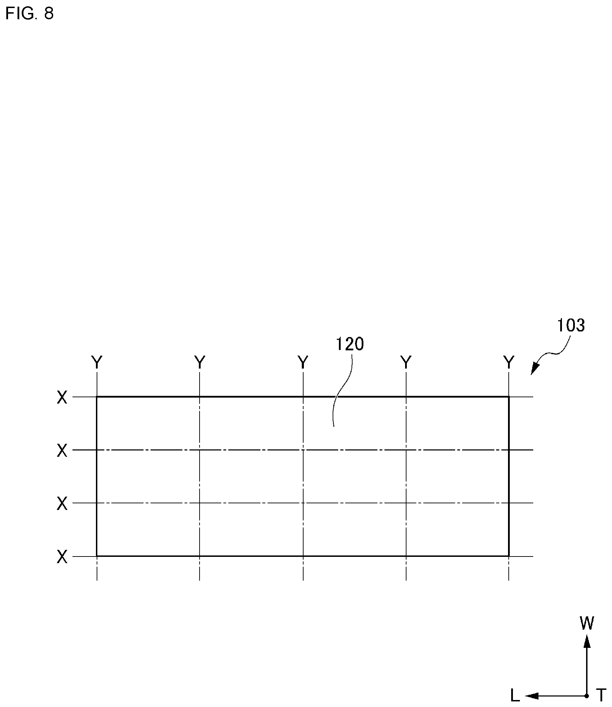

As illustrated in Fig. 8, no unfired first internal electrode layer 121a or unfired second internal electrode layer 121b is formed on the third ceramic green sheets 103 for forming the first outer layer portion 31 and the second outer layer portion 32, unlike the first ceramic green sheet 101 and the second ceramic green sheet 102.

The third ceramic green sheets 103 include two types: a ceramic green sheet for forming the inner-side outer layer portions 31i and 32i and a ceramic green sheet for forming the outer-side outer layer portions 31o and 32o, which have different component compositions.

The unfired first internal electrode layers 121a and the unfired second internal electrode layers 121b can be formed using any conductive paste. For forming the first internal electrode layers 121a and the second internal electrode layers 121b using a conductive paste, for example, a screen printing method, a gravure printing method, or the like can be used.

The unfired first internal electrode layers 121a and the unfired second internal electrode layers 121b are disposed across two regions adjacent to each other in the length (L) direction and partitioned by the cut lines Y, have a predetermined width in the width (W) direction, and extend in a strip shape in the length (L) direction. In the first internal electrode layers 121a and the second internal electrode layers 121b, the regions partitioned by the cut lines Y are offset by one row in the length (L) direction. That is, a cut line Y passing through the center of each first internal electrode layer 121a passes through a region between adjacent second internal electrode layers 121b, and a cut line Y passing through the center of each second internal electrode layer 121b passes through a region between adjacent first internal electrode layers 121a.

A mother block is produced by stacking the first ceramic green sheets 101 and the second ceramic green sheets 102, and also the third ceramic green sheets for forming the inner-side outer layer portions 31i and 32i and the outer-side outer layer portions 31o and 32o.

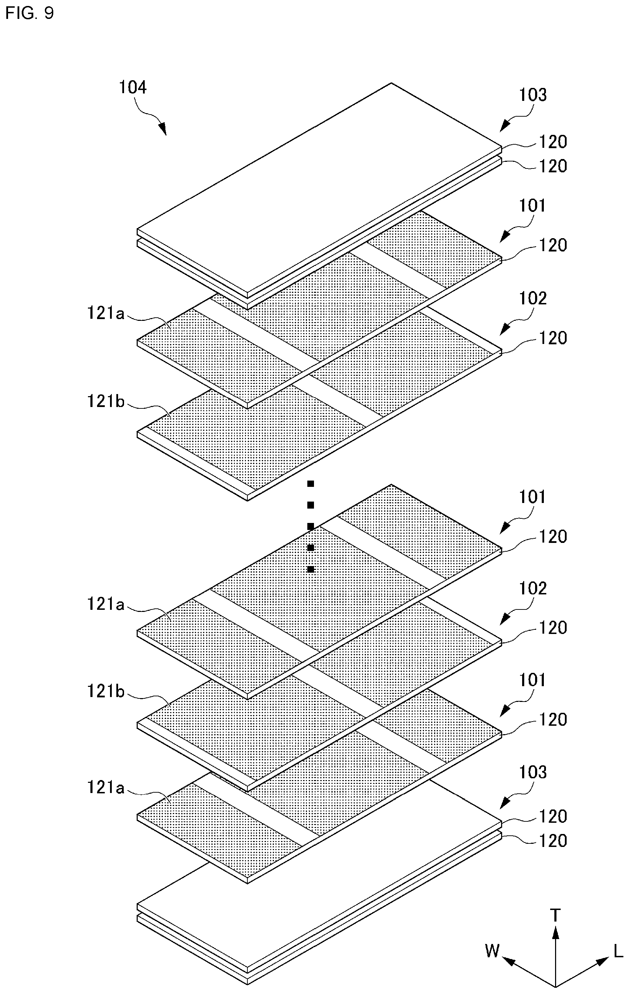

Fig. 9 is an exploded perspective view schematically illustrating an example of a mother block.

In Fig. 9, for convenience of explanation, the first ceramic green sheets 101, the second ceramic green sheets 102, and the third ceramic green sheets 103 are illustrated in an exploded manner. In an actual mother block 104, the first ceramic green sheets 101, the second ceramic green sheets 102, and the third ceramic green sheets 103 are pressure-bonded and integrated by means such as isostatic pressing.

In the mother block 104 illustrated in Fig. 9, the first ceramic green sheets 101 and the second ceramic green sheets 102 corresponding to the internal layer portion 30 are alternately stacked in the lamination (T) direction. The third ceramic green sheets 103 corresponding to the inner-side outer layer portions 31i and 32i and the outer-side outer layer portions 31o and 32o are respectively stacked on upper and lower surfaces, in the lamination (T) direction, of the alternately stacked first ceramic green sheets 101 and second ceramic green sheets 102.

The resulting mother block 104 is cut along the cut lines X and Y (see Figs. 6, 7, and 8) to produce a plurality of green chips. For this cutting, for example, methods such as dicing, press cutting, and laser cutting are employed.

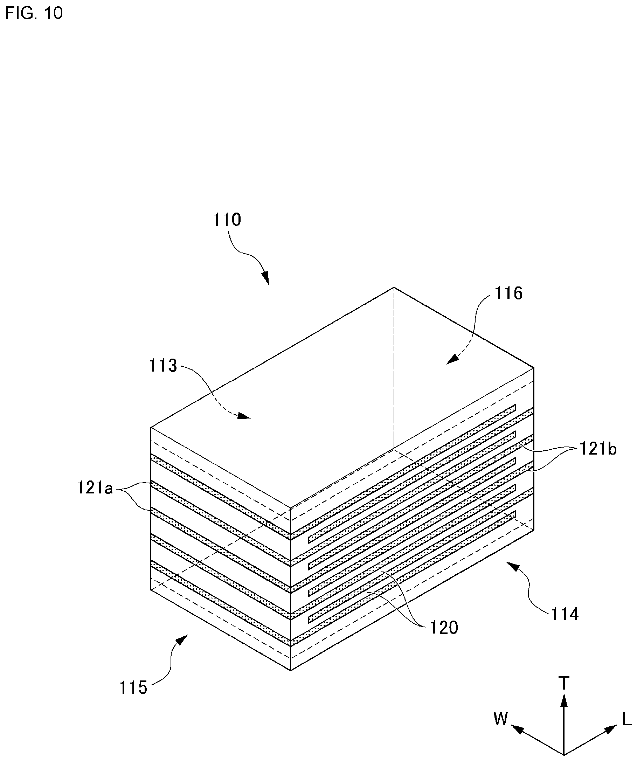

Fig. 10 is a perspective view schematically illustrating an example of a green chip.

The green chip 110 illustrated in Fig. 10 has a multilayer structure including a plurality of unfired dielectric layers 120, unfired first internal electrode layers 121a, and unfired second internal electrode layers 121b. A first side surface 113 and a second side surface 114 of the green chip 110 are faces exposed by cutting along the cut lines X, and a first end surface 115 and a second end surface 116 are faces exposed by cutting along the cut lines Y. The first internal electrode layers 121a and the second internal electrode layers 121b are exposed on the first side surface 113 and the second side surface 114. In addition, the first internal electrode layers 121a are exposed on the first end surface 115, and the second internal electrode layers 121b are exposed on the second end surface 116.

The first side surface 113 and the second side surface 114 of the green chip 110 may undergo slight downward plastic deformation at the side surfaces due to stress applied in a cutting direction, which is a downward direction in the drawing, when the mother block 104 is cut to obtain a plurality of green chips 110. The cut surfaces may be insufficiently smooth, or foreign matter may be present on the cut surfaces. Thus, the first side surface 113 and the second side surface 114 are preferably polished to remove deformed portions.

Unfired side margin portions are formed on the first side surface 113 and the second side surface 114 of the obtained green chip 110 to produce an unfired multilayer body. The unfired side margin portions are formed, for example, by attaching ceramic green sheets made of a dielectric ceramic to the first side surface 113 and the second side surface 114 of the green chip.

Ceramic green sheets constituting the inner side margin portions 41i and 42i and the outer side margin portions 41o and 42o that constitute the first side margin portion 41 and the second side margin portion 42 are made of a dielectric ceramic containing a perovskite-type compound that contains Ca and Zr. For such a dielectric ceramic, a powder obtained by mixing powders, such as CaCO₃, SrCO₃, BaCO₃, TiO₂, and ZrO₂, calcining the mixture, and then pulverizing the calcined mixture can be used as a ceramic raw material for the main component. To the ceramic raw material for the main component, SiO₂, MnCO₃, and the like can be added.

The ceramic green sheets for forming the inner side margin portions 41i and 42i contain a larger amount of a Mn compound, such as MnCO₃, added than the ceramic green sheets for forming the outer side margin portions 41o and 42o. The ceramic green sheets for forming the outer side margin portions 41o and 42o contain a larger amount of SiO₂ glass than the ceramic green sheets for forming the inner side margin portions 41i and 42i.

Thus, in the manufactured multilayer ceramic capacitor 1, the calcium silicate content of the outer side margin portions 41o and 42o is greater than the calcium silicate content of the inner side margin portions 41i and 42i located on the internal layer portion 30 side. The Ca-Mn-Si-based oxide content of the inner side margin portions 41i and 42i located on the internal layer portion 30 side is greater than the Ca-Mn-Si-based oxide content of the outer side margin portions 41o and 42o. The calcium silicate content and the Ca-Mn-Si-based oxide content in the width (W) direction of the first side margin portion 41 and the second side margin portion 42 are adjusted, in this manner, to form dense ceramic layers while ensuring sinterability, thereby providing the multilayer ceramic capacitor 1 having high moisture resistance reliability.

A ceramic green sheet corresponding to the inner side margin portion 41i and then a ceramic green sheet corresponding to the outer side margin portion 41o are pressed against the first side surface 113 of the green chip 110 and punched out, thereby forming an unfired first side margin portion 41. A ceramic green sheet corresponding to the inner side margin portion 42i and then a ceramic green sheet corresponding to the outer side margin portion 42o are pressed against the second side surface 114 of the green chip 110 and punched out, thereby forming an unfired second side margin portion 42. As described above, an unfired multilayer body is obtained.

Thus, in the multilayer body 10 formed by attaching the inner side margin portions 41i and 42i and the outer side margin portions 41o and 42o to the green chip 110, one-side end portions, in the width (W) direction, of the plurality of internal electrode layers 21 can be arranged so as to be aligned in the lamination (T) direction. When a WT cross section of the multilayer body 10 extending in the lamination (T) direction and the width (W) direction is viewed, the amount of misalignment, in the width (W) direction, of the width-direction end portions of all adjacent internal electrode layers 21 can be set to 5 µm or less.

### (Measurement Method for Amount of Misalignment, in Width (W) Direction, of Width-Direction End Portions of All Adjacent Internal Electrode Layers 21)

The amount of misalignment, in the width (W) direction, of the width-direction end portions of all adjacent internal electrode layers 21 can be measured using a scanning electron microscope (hereinafter referred to as a "SEM").

Specifically, first, cross-section polishing is performed from the first end surface or the second end surface of the multilayer ceramic capacitor to the central portion, in the length direction, of the multilayer ceramic capacitor to expose a WT cross section.

Next, the WT cross section is observed with the SEM.

Observation conditions at this time are as follows: observation is performed at a magnification of 2000× and an accelerating voltage of 5 kV, and images of the width-direction end portions of the internal electrode layers 21 are captured with a field of view of 50 µm × 50 µm at an upper portion, a lower portion, and a central portion along the lamination (T) direction. Based on the above observation conditions, images are captured, and the distance between the ends of adjacent internal electrode layers 21 in the width (W) direction is measured using the scale in the SEM image. This allows for the determination of the amount of misalignment in the width (W) direction for all adjacent internal electrode layers 21.

When the plurality of internal electrode layers 21 are arranged such that one-side ends thereof in the width (W) direction are aligned in the lamination (T) direction, it is possible to accurately set the capacity of the multilayer ceramic capacitor. In addition, since side edges of the internal electrode layers 21 in the width (W) direction extend linearly in the length (L) direction, a current path flowing on the surface is shortened, equivalent series inductance (ESL) can be reduced, and a short circuit between adjacent internal electrode layers can be inhibited, thereby making it possible to provide the multilayer ceramic capacitor 1 having high reliability.

In the above embodiment, an example is described in which ceramic green sheets corresponding to the inner side margin portions 41i and 42i and ceramic green sheets corresponding to the outer side margin portions 41o and 42o are pressed against the first side surface 113 and the second side surface 114 of the green chip 110 and are then punched out; however, the embodiment is not limited thereto. For example, an unfired multilayer body can also be obtained by applying a ceramic paste for forming the inner side margin portions 41i and 42i to the first side surface 113 and the second side surface 114 of the green chip 110 and further applying a ceramic paste for forming the outer side margin portions 41o and 42o.

The unfired multilayer body obtained by the above method is preferably subjected to barrel polishing or the like. The polishing of the unfired multilayer body rounds the corner portions and the ridge portions of the multilayer body 10 after firing.

The first outer electrode 51a and the second outer electrode 52 are formed on the first end surface 15 and the second end surface 16, respectively, of the multilayer body 10. The first outer electrode 51 and the second outer electrode 52 can each include a base electrode layer and a plating layer disposed on the base electrode layer. The base electrode layer is formed by applying, to the first end surface 15 and the second end surface 16 of the multilayer body 10, a conductive paste containing a metal component and a glass component and then baking the conductive paste. As the metal component contained in the conductive paste, for example, metals, such as Cu, Ni, Ag, Pd, and Au, or an alloy, such as an Ag-Pd alloy, can be used.

As the glass component contained in the conductive paste, B-Si-based glass, Ba-B-Si-based glass, B-Si-Zn-based glass, B-Si-Zn-Ba-based glass, B-Si-Zn-Ba-Ca-Al-based glass, or the like can be used.

The plating layer disposed on the base electrode layer contains, for example, at least one of metals, such as Cu, Ni, Ag, Pd, and Au, or an alloy, such as an Ag-Pd alloy. The plating layer can have, for example, a two-layer structure including a Ni plating layer and an Sn plating layer. However, the plating layer may have a single-layer structure or a multilayer structure.

In this manner, the multilayer ceramic capacitor 1 is manufactured.

In the above embodiment, a plurality of green chips 110 are obtained by cutting the mother block 104 along the cut lines X and Y, and then unfired side margin portions are formed on both side surfaces of each green chip 110. However, the process is not limited thereto and may be changed as described below.

Specifically, the mother block may be cut only along the cut lines X to provide a plurality of rod-shaped green block bodies in which, on side surfaces exposed by the cutting along the cut lines X, the first internal electrode layers and the second internal electrode layers are exposed. After unfired side margin portions are formed on both side surfaces of each green block body, the green block bodies may be cut along the cut lines Y to provide a plurality of unfired multilayer bodies, and then the unfired multilayer bodies may be fired. After firing, a multilayer ceramic capacitor can be manufactured by performing the same steps as in the above embodiment.

Next, another method for manufacturing the multilayer ceramic capacitor 1 (a second embodiment) will be described. Regarding the second embodiment, description will be mainly given of portions different from those of the first embodiment.

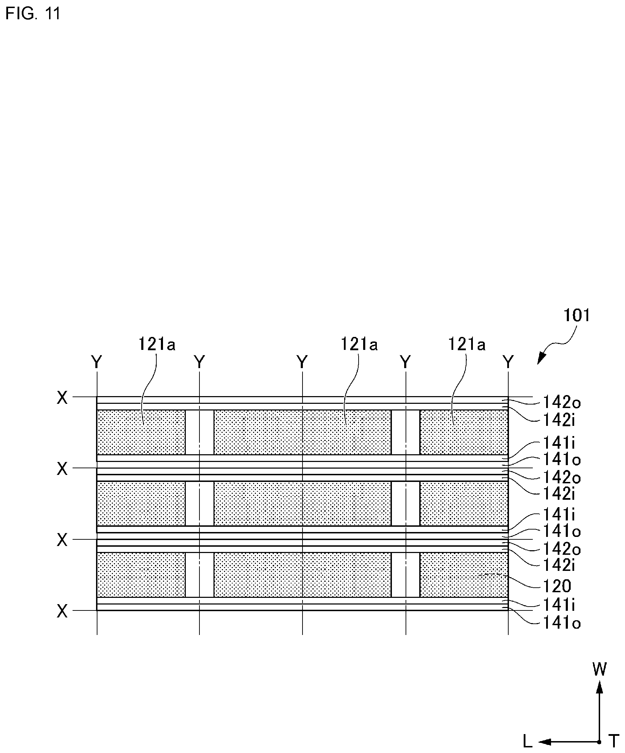

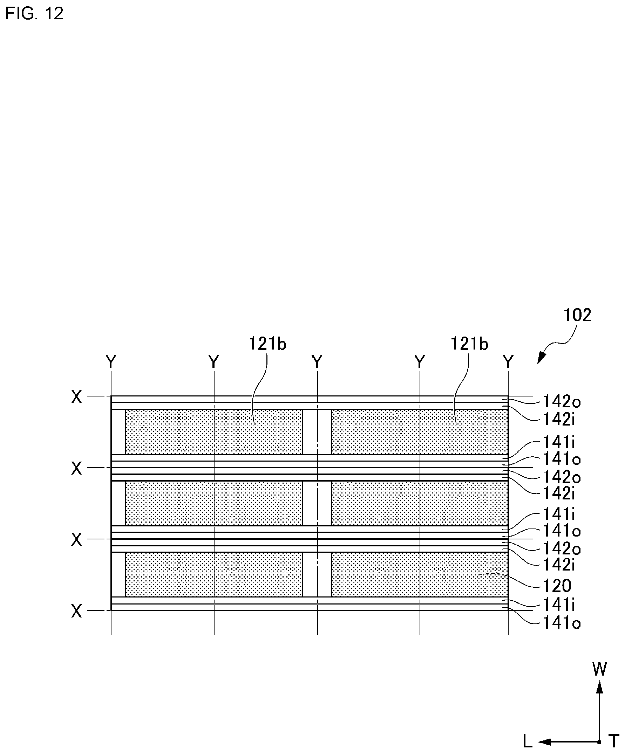

Figs. 11 and 12 illustrate a first ceramic green sheet 101 and a second ceramic green sheet 102, respectively, for forming the internal layer portion 30. These correspond to the first ceramic green sheet 101 in Fig. 6 of the first embodiment and the second ceramic green sheet 102 in Fig. 7 of the first embodiment. A third ceramic green sheet 103 used in the second embodiment has the same configuration as the third ceramic green sheet 103 used in the first embodiment illustrated in Fig. 8. As in the first embodiment, two types of the third ceramic green sheet 103 used in the second embodiment are prepared: one for forming the inner-side outer layer portions 31i and 32i, in which an Mn compound such as MnCO₃ is blended in a relatively large amount, and another for forming the outer-side outer layer portions 31o and 32o, in which SiO₂ glass is blended in a relatively large amount.

The first ceramic green sheet 101, the second ceramic green sheet 102, and the third ceramic green sheet 103 are marked with cut lines X and Y for cutting into individual multilayer ceramic capacitors 1. The cut lines X are parallel to the length (L) direction, and the cut lines Y are parallel to the width (W) direction.

As illustrated in Fig. 11, for the first ceramic green sheet 101, the unfired first internal electrode layers 121a corresponding to the first internal electrode layers 21a are formed on the unfired dielectric layer 120 corresponding to the dielectric layer 20. For the first ceramic green sheet 101 illustrated in Fig. 11, ceramic pastes 141i and 142i are continuously applied in the length (L) direction to both side portions, in the width (W) direction, of each first internal electrode layer 121a, and ceramic pastes 141o and 142o are continuously applied in the length (L) direction to both side portions thereof. In the embodiment illustrated in Fig. 11, since the first ceramic green sheet 101 is cut along the cut lines X, the ceramic paste 141o and the ceramic paste 142o can be applied at one time onto the unfired dielectric layer 120 with the same component composition.

As illustrated in Fig. 12, for the second ceramic green sheet 102, unfired second internal electrode layers 121b corresponding to the second internal electrode layers 21b are formed on the unfired dielectric layer 120 corresponding to the dielectric layer 20. For the second ceramic green sheet 102 illustrated in Fig. 12, ceramic pastes 141i and 142i are continuously applied in the length (L) direction to both side portions, in the width (W) direction, of each second internal electrode layer 121b, and ceramic pastes 141o and 142o are continuously applied in the length (L) direction to both side portions thereof. In the embodiment illustrated in Fig. 12, since the second ceramic green sheet 102 is cut along the cut lines X, the ceramic paste 141o and the ceramic paste 142o can be applied at one time onto the unfired dielectric layer 120 with the same component composition.

The ceramic pastes 141i, 142i, 141o, and 142o are made of dielectric ceramic containing a perovskite-type compound that contains Ca and Zr. For such a dielectric ceramic, a powder obtained by mixing powders, such as CaCO₃, SrCO₃, BaCO₃, TiO₂, and ZrO₂, calcining the mixture, and then pulverizing the calcined mixture can be used as a ceramic raw material for the main component. To the ceramic raw material for the main component, SiO₂, MnCO₃, and the like can be added.

The inner ceramic pastes 141i and 142i applied to both side portions of each first internal electrode layer 21a or each second internal electrode layer 21b contain a larger amount of an Mn compound such as MnCO₃ than the outer ceramic pastes 141o and 142o applied to both side portions thereof. The outer ceramic pastes 141o and 142o contain a larger amount of SiO₂ glass than the inner ceramic pastes 141i and 142i.

The first internal electrode layer 121a and the second internal electrode layer 121b can be formed using any conductive paste. For forming the first internal electrode layer 121a and the second internal electrode layer 121b using a conductive paste, for example, a screen printing method, a gravure printing method, or the like can be used.

The unfired first internal electrode layers 121a and the unfired second internal electrode layers 121b are disposed across two regions adjacent to each other in the length (L) direction and partitioned by the cut lines Y, have a predetermined width in the width (W) direction, and extend in a strip shape in the length (L) direction. In the first internal electrode layers 121a and the second internal electrode layers 121b, the regions partitioned by the cut lines Y are offset by one row in the length (L) direction. That is, a cut line Y passing through the center of each first internal electrode layer 121a passes through a region between adjacent second internal electrode layers 121b, and a cut line Y passing through the center of each second internal electrode layer 121b passes through a region between adjacent first internal electrode layers 121a.

The first ceramic green sheets 101 and the second ceramic green sheets 102 are stacked, and the third ceramic green sheets for forming the inner-side outer layer portions 31i and 32i and the outer-side outer layer portions 31o and 32o are stacked, and the resulting body is cut along the cut lines X and Y (see Figs. 11, 12, and 8) to produce green chips.

In the second embodiment, unlike in the first embodiment, it is not necessary to attach the ceramic green sheets for forming the side margin portions to both side surfaces of each green chip.

For the multilayer ceramic capacitor 1 of the second embodiment obtained by firing each green chip, as in the multilayer ceramic capacitor of the first embodiment, in a WT cross section extending in the lamination (T) direction and the width (W) direction of the multilayer body 10, the calcium silicate content of the outer side margin portion 41o located on the first side surface 13 side is greater than the calcium silicate content of the inner side margin portion 41i located on the internal layer portion 30 side. The calcium silicate content of the outer side margin portion 42o located on the second side surface 14 side is greater than the calcium silicate content of the inner side margin portion 42i located on the internal layer portion 30 side. Therefore, a balance can be achieved between crystals formed in the outer side margin portions 41o and 42o and the sintering aid content, and thus the outer side margin portion 41o is more likely to be formed densely.

As a result, dense ceramic layers are formed while ensuring sinterability, and thus the multilayer ceramic capacitor 1 having high moisture resistance reliability can be provided.

Similarly, in the manufactured multilayer ceramic capacitor 1, in a WT cross section extending in the lamination (T) direction and the width (W) direction of the multilayer body 10, the Ca-Mn-Si-based oxide content of the inner side margin portion 41i located on the internal layer portion 30 side is greater than the Ca-Mn-Si-based oxide content of the outer side margin portion 41o located on the first side surface 13 side. The Ca-Mn-Si-based oxide content of the inner side margin portion 42i located on the internal layer portion 30 side is greater than the Ca-Mn-Si-based oxide content of the outer side margin portion 42o located on the second side surface 14 side. The Ca-Mn-Si-based oxide contained in the inner side margin portions 41i and 42i functions as a sintering aid during firing. The Ca-Mn-Si-based oxide functions as the sintering aid and can ensure sinterability of the inner side margin portions 41i and 42i. Therefore, dense inner side margin portions 41i and 42i are easily formed. As a result, since moisture and the like are less likely to enter the inner side margin portions 41i and 42i from the outside, moisture resistance reliability of the multilayer ceramic capacitor 1 can be improved.

Since the first outer layer portion 31 and the second outer layer portion 32 are stacked in the same manner as in the first embodiment by the inner-side outer layer portions 31i and 32i and the outer-side outer layer portions 31o and 32o constituting the first outer layer portion 31 and the second outer layer portion 32, the first outer layer portion 31 and the second outer layer portion 32 of the second embodiment can also obtain the same effects as those of the first embodiment.

In the second embodiment, when the first ceramic green sheet 101 and the second ceramic green sheet 102 are viewed in plan from the lamination (T) direction, the composition of a region of the unfired dielectric layer 120 overlapping a region to which the inner ceramic pastes 141i and 142i are applied is adjusted such that the content of an Mn compound such as MnCO3 is higher than that of the composition of a region of the unfired dielectric layer 120 overlapping a region to which the outer ceramic pastes 141o and 142o are applied, and the composition of a region of the unfired dielectric layer 120 overlapping a region to which the outer ceramic pastes 141o and 142o are applied is adjusted such that the content of SiO2 glass is higher than that of the composition of a region of the unfired dielectric layer 120 overlapping a region to which the inner ceramic pastes 141i and 142i are applied. This further enhances the effect of improving moisture resistance.

In each of the first and second embodiments, the two-terminal multilayer ceramic capacitor 1 including the first outer electrode 51 and the second outer electrode 52 has been described as an example; however, the present invention is not limited to the two-terminal multilayer ceramic capacitor, and various changes can be made within the scope of the gist of the present invention.

The embodiments of the present invention have been described above; however, the present invention is not limited to the embodiments and can be implemented in various forms without departing from the gist of the present invention. The present invention includes the following combinations.
<1> A multilayer ceramic capacitor includes:
   a multilayer body including a plurality of dielectric layers and a plurality of internal electrode layers alternately laminated along a lamination direction, a first main surface and a second main surface opposing each other in the lamination direction, a first side surface and a second side surface opposing each other in a width direction orthogonal to the lamination direction, and a first end surface and a second end surface opposing each other in a length direction orthogonal to both the lamination direction and the width direction;
   a first outer electrode provided on the first end surface and connected to end portions of the plurality of internal electrode layers; and
   a second outer electrode provided on the second end surface and connected to end portions of the plurality of internal electrode layers,
   in which the multilayer body includes an internal layer portion in which the plurality of internal electrode layers face each other to generate an electrostatic capacity, a first outer layer portion located on a first main surface side of the internal layer portion in the lamination direction, a second outer layer portion located on a second main surface side of the internal layer portion in the lamination direction, a first side margin portion located on a first side surface side, in the width direction, of the internal layer portion and on a first side surface side of the first outer layer portion, and a second side margin portion located on a second side surface side, in the width direction, of the internal layer portion and on a second side surface side of the second outer layer portion,
   the first side margin portion and the second side margin portion each include an outer side margin portion located on the first side surface side or the second side surface side, and an inner side margin portion located closer to the internal layer portion than the outer side margin portion,
   in a cross section of the multilayer body extending in the lamination direction and the width direction, a calcium silicate content of the outer side margin portion is greater than a calcium silicate content of the inner side margin portion,
   a Ca-Mn-Si-based oxide content of the inner side margin portion is greater than a Ca-Mn-Si-based oxide content of the outer side margin portion,
   the first outer layer portion and the second outer layer portion each include an outer-side outer layer portion located on the first main surface side or the second main surface side, and an inner-side outer layer portion located closer to the internal layer portion than the outer-side outer layer portion,
   in a cross section of the multilayer body extending in the lamination direction and the width direction, a calcium silicate content of the outer-side outer layer portion is greater than a calcium silicate content of the inner-side outer layer portion, and
   a Ca-Mn-Si-based oxide content of the inner-side outer layer portion is greater than a Ca-Mn-Si-based oxide content of the outer-side outer layer portion.
<2> In the multilayer ceramic capacitor described in <1>, in a cross section of the multilayer body extending in the lamination direction and the width direction, an amount of misalignment, in the width direction, of width-direction end portions of all adjacent internal electrode layers is 5 µm or less.
<3> In the multilayer ceramic capacitor described in <1> or <2>, a thickness, in the lamination direction, of the outer-side outer layer portion and a thickness, in the lamination direction, of the inner-side outer layer portion are different from each other, and
   the thickness, in the lamination direction, of the outer-side outer layer portion is greater than the thickness of the inner-side outer layer portion.
<4> In the multilayer ceramic capacitor described in any one of <1> to <3>, a thickness, in the lamination direction, of the outer-side outer layer portion is 10 µm or more and 30 µm or less, and a thickness, in the lamination direction, of the inner-side outer layer portion is 5 µm or more and 20 µm or less.
<5> In the multilayer ceramic capacitor described in any one of <1> to <4>, a thickness, in the width direction, of the outer side margin portion and a thickness, in the width direction, of the inner side margin portion are different from each other, and
   the thickness, in the width direction, of the outer side margin portion is greater than the thickness, in the width direction, of the inner side margin portion.
<6> In the multilayer ceramic capacitor described in any one of <1> to <5>, a thickness, in the width direction, of the outer side margin portion is 3 µm or more and 20 µm or less, and a thickness, in the width direction, of the inner side margin portion is 2 µm or more and 20 µm or less.
<7> In the multilayer ceramic capacitor described in any one of <1> to <6>, the calcium silicate content of the outer-side outer layer portion is greater than the calcium silicate content of the inner-side outer layer portion by 5 atom% or more and 30 atom% or less.
<8> In the multilayer ceramic capacitor described in any one of <1> to <7>, the Ca-Mn-Si-based oxide content of the inner-side outer layer portion is greater than the Ca-Mn-Si-based oxide content of the outer-side outer layer portion by 2 atom% or more and 10 atom% or less.
<9> In the multilayer ceramic capacitor described in any one of <1> to <8>, the calcium silicate content of the outer side margin portion is greater than the calcium silicate content of the inner side margin portion by 5 atom% or more and 30 atom% or less.
<10> In the multilayer ceramic capacitor described in any one of <1> to <9>, the Ca-Mn-Si-based oxide content of the inner side margin portion is greater than the Ca-Mn-Si-based oxide content of the outer side margin portion by 2 atom% or more and 10 atom% or less.

### Reference Signs List

1 multilayer ceramic capacitor
10 multilayer body
11 first main surface
12 second main surface
13 first side surface
14 second side surface
15 first end surface
16 second end surface
20 dielectric layer
21 internal electrode layer
21a first internal electrode layer
21b second internal electrode layer
30 internal layer portion
31 first outer layer portion
31i inner-side outer layer portion
31o outer-side outer layer portion
32 second outer layer portion
32i inner-side outer layer portion
32o outer-side outer layer portion
41 first side margin portion
41i inner side margin portion
41o outer side margin portion
42 second side margin portion
42i inner side margin portion
42o outer side margin portion
51 first outer electrode
52 second outer electrode

## Claims

1. A multilayer ceramic capacitor comprising:
a multilayer body including a plurality of dielectric layers and a plurality of internal electrode layers alternately laminated along a lamination direction, a first main surface and a second main surface opposing each other in the lamination direction, a first side surface and a second side surface opposing each other in a width direction orthogonal to the lamination direction, and a first end surface and a second end surface opposing each other in a length direction orthogonal to both the lamination direction and the width direction;
a first outer electrode provided on the first end surface and connected to end portions of the plurality of internal electrode layers; and
a second outer electrode provided on the second end surface and connected to end portions of the plurality of internal electrode layers,
wherein the multilayer body includes an internal layer portion in which the plurality of internal electrode layers face each other to generate an electrostatic capacity, a first outer layer portion located on a first main surface side of the internal layer portion in the lamination direction, a second outer layer portion located on a second main surface side of the internal layer portion in the lamination direction, a first side margin portion located on a first side surface side, in the width direction, of the internal layer portion and on a first side surface side of the first outer layer portion, and a second side margin portion located on a second side surface side, in the width direction, of the internal layer portion and on a second side surface side of the second outer layer portion,
the first side margin portion and the second side margin portion each include an outer side margin portion located on the first side surface side or the second side surface side, and an inner side margin portion located closer to the internal layer portion than the outer side margin portion,
in a cross section of the multilayer body extending in the lamination direction and the width direction, a calcium silicate content of the outer side margin portion is greater than a calcium silicate content of the inner side margin portion,
a Ca-Mn-Si-based oxide content of the inner side margin portion is greater than a Ca-Mn-Si-based oxide content of the outer side margin portion,
the first outer layer portion and the second outer layer portion each include an outer-side outer layer portion located on the first main surface side or the second main surface side, and an inner-side outer layer portion located closer to the internal layer portion than the outer-side outer layer portion,
in a cross section of the multilayer body extending in the lamination direction and the width direction, a calcium silicate content of the outer-side outer layer portion is greater than a calcium silicate content of the inner-side outer layer portion, and
a Ca-Mn-Si-based oxide content of the inner-side outer layer portion is greater than a Ca-Mn-Si-based oxide content of the outer-side outer layer portion.

2. The multilayer ceramic capacitor according to claim 1, wherein, in a cross section of the multilayer body extending in the lamination direction and the width direction, an amount of misalignment, in the width direction, of width-direction end portions of all adjacent internal electrode layers is 5 µm or less.

3. The multilayer ceramic capacitor according to claim 1 or 2, wherein a thickness, in the lamination direction, of the outer-side outer layer portion and a thickness, in the lamination direction, of the inner-side outer layer portion are different from each other, and
the thickness, in the lamination direction, of the outer-side outer layer portion is greater than the thickness of the inner-side outer layer portion.

4. The multilayer ceramic capacitor according to any one of claims 1 to 3, wherein a thickness, in the lamination direction, of the outer-side outer layer portion is 10 µm or more and 30 µm or less, and a thickness, in the lamination direction, of the inner-side outer layer portion is 5 µm or more and 20 µm or less.

5. The multilayer ceramic capacitor according to any one of claims 1 to 4, wherein a thickness, in the width direction, of the outer side margin portion and a thickness, in the width direction, of the inner side margin portion are different from each other, and
the thickness, in the width direction, of the outer side margin portion is greater than the thickness, in the width direction, of the inner side margin portion.

6. The multilayer ceramic capacitor according to any one of claims 1 to 5, wherein a thickness, in the width direction, of the outer side margin portion is 3 µm or more and 20 µm or less, and a thickness, in the width direction, of the inner side margin portion is 2 µm or more and 20 µm or less.

7. The multilayer ceramic capacitor according to any one of claims 1 to 6, wherein the calcium silicate content of the outer-side outer layer portion is 5 atom% or more and 30 atom% or less relative to the calcium silicate content of the inner-side outer layer portion.

8. The multilayer ceramic capacitor according to any one of claims 1 to 7, wherein the Ca-Mn-Si-based oxide content of the inner-side outer layer portion is 2 atom% or more and 10 atom% or less relative to the Ca-Mn-Si-based oxide content of the outer-side outer layer portion.

9. The multilayer ceramic capacitor according to any one of claims 1 to 8, wherein the calcium silicate content of the outer side margin portion is 5 atom% or more and 30 atom% or less relative to the calcium silicate content of the inner side margin portion.

10. The multilayer ceramic capacitor according to any one of claims 1 to 9, wherein the Ca-Mn-Si-based oxide content of the inner side margin portion is 2 atom% or more and 10 atom% or less relative to the Ca-Mn-Si-based oxide content of the outer side margin portion.
